(19) Europäisches Patentamt
European Patent Office
Office européen des brevets

(11) **EP 1 720 738 B1**

(12) **EUROPÄISCHE PATENTSCHRIFT**

(45) Veröffentlichungstag und Bekanntmachung des Hinweises auf die Patenterteilung:
**04.05.2011   Patentblatt 2011/18**

(21) Anmeldenummer: **05716867.6**

(22) Anmeldetag: **01.03.2005**

(51) Int Cl.:
**B60R 21/01** (2006.01)

(86) Internationale Anmeldenummer:
**PCT/EP2005/050901**

(87) Internationale Veröffentlichungsnummer:
**WO 2005/082681 (09.09.2005 Gazette 2005/36)**

(54) **VERFAHREN UND ANORDNUNG ZUM STEUERN EINES SICHERUNGSMITTELS IN EINEM FAHRZEUG**

METHOD AND ARRANGEMENT FOR CONTROLLING A SAFETY MEANS ON A MOTOR VEHICLE

PROCEDE ET DISPOSITIF POUR COMMANDER UN DISPOSITIF DE SECURITE DANS UN VEHICULE

(84) Benannte Vertragsstaaten:
**DE FR**

(30) Priorität: **01.03.2004   DE 102004010410**

(43) Veröffentlichungstag der Anmeldung:
**15.11.2006   Patentblatt 2006/46**

(73) Patentinhaber: **Continental Teves AG & Co. oHG 60488 Frankfurt am Main (DE)**

(72) Erfinder:
• **DIEBOLD, Jürgen**
**65760 Eschborn (DE)**
• **KLUG, Michael**
**63225 Langen (DE)**

• **FÖRSTER, Daniel**
**64289 Darmstadt (DE)**
• **ARBITMANN, Maxim**
**61348 Bad Homburg (DE)**

(74) Vertreter: **Büchner, Jörg et al**
**Conti Temic microelectronic GmbH**
**Patente & Lizenzen**
**Sieboldstraße 19**
**90411 Nürnberg (DE)**

(56) Entgegenhaltungen:
DE-A1- 10 301 290      DE-A1- 19 636 448
US-A1- 2003 220 728    US-B1- 6 256 565
US-B1- 6 650 984

EP 1 720 738 B1

**Beschreibung**

Die Erfindung betrifft ein Verfahren mit den Merkmalen des Oberbegriffs des Anspruchs 1. Die Erfindung betrifft ferner ein Verfahren mit den Merkmalen des Oberbegriffs des Anspruchs 16.

Die Erfindung betrifft darüber hinaus Anordnungen zur Durchführung der Verfahren.

Unter dem Begriff der passiven Sicherheit wird in der Automobiltechnik der Schutz von Fahrzeuginsassen vor schwerwiegenden Unfallfolgen verstanden. Zur Gewährleistung dieses Schutzes werden insbesondere reversible Insassenschutzmittel genutzt, deren Betriebszustände in der Regel einen oder mehrere aktive Zustände sowie einen inaktiven Zustand umfassen und durch einen automatischen Ansteuerungsmechanismus reversibel verändert werden können. Beispiele für reversible Insassenschutzmittel sind reversible motorisierte Gurtstraffer (RMG), welche die von den Fahrzeuginsassen umgelegten Sicherheitsgurte in Gefahrensituationen straffen, um die Insassen in ihren Sitzen zu fixieren, automatische Sitzverstellungen, mit denen die Sitze in Gefahrensituationen in eine aufrechte Position gebracht werden können sowie elektrische Fensterheber und elektrische Stellvorrichtungen für ein Schiebedach, mit denen die Fenster des Fahrzeugs und ein gegebenenfalls vorhandenes Schiebedach in Gefahrensituationen geschlossen werden können.

Im Gegensatz zu irreversiblen Insassenschutzmitteln wie beispielsweise Airbags, die nach dem Auslösen nicht durch einen entsprechenden automatischen Ansteuerungsmechanismus in den inaktiven Zustand versetzt werden können, kann die Aktivierung von reversiblen Sicherungsmitteln bereits im Vorfeld eines möglichen Unfalls erfolgen. Dies erfordert jedoch die Erkennung einer vorliegenden Verkehrssituation und ihre Bewertung im Hinblick auf die Möglichkeit und eines bevorstehenden Unfalls und die Art und Schwere des Unfalls.

Dazu ist aus der deutschen Patentschrift DE 196 36 448 C2 ein Insassen-Rückhaltesystem bekannt, bei dem ein Gurtspannungssteuerungsmechanismus durch eine Prozessoreinheit angesteuert wird, welche die Signale eines Objektdetektors auswertet, der Objekte in der Nähe des Fahrzeugs detektiert. Verschiedene Betriebsmodi des Gurtspannungssteuerungsmechanismus werden dabei aktiviert, wenn der Abstand zwischen einem Fahrzeug und einem vor dem Fahrzeug befindlichen Objekt Sicherheitsabstände unterschreitet, die in Abhängigkeit der Fahrzeuggeschwindigkeit bzw. der Relativgeschwindigkeit des Fahrzeugs und des Objekts bestimmt werden oder wenn die anhand des Abstandes und der Relativgeschwindigkeit bestimmte Zeit bis zu einer Kollision des Fahrzeugs mit einem sich seitlich von dem Fahrzeug befindlichen Objekt vorgegebene Schwellenwerte unterschreitet.

Bei dem bekannten System bleiben insbesondere die situationsabhängigen Möglichkeiten des Fahrers zur Vermeidung einer Kollision und ihre Beurteilung weitgehend unberücksichtigt. Insbesondere kann sich die vorgenommene Beurteilung der Verkehrssituation somit stark von der Einschätzung durch den Fahrer unterscheiden. Die Ansteuerung ist in vielen Situationen für den Fahrer nicht nachvollziehbar, wodurch der Fahrkomfort beeinträchtigt wird und wodurch es zu sicherheitsgefährdenden Irritationen des Fahrers kommen kann.

Aus der DE103 01 290 A1 ist ein Kollisionsschadensminderungssystem bekannt, bei dem ein Mikrocomputer aus einem gegenwärtigen Relativabstand und Relativwinkel eines Objekts und der gegenwärtigen Geschwindigkeit und Drehradius des eigenen Fahrzeugs eine Gesamtkollisionswahrscheinlichkeit und mit einem maximalen Lenkbereich ein zweidimensionales befahrbares Gebiet berechnet wird.

Der Erfindung liegt daher die Aufgabe zugrunde, die Steuerung eines Sicherungsmittels in einem Fahrzeug besser an die vorliegende Verkehrssituation anzupassen.

Erfindungsgemäß wird diese Aufgabe durch ein Verfahren nach dem Patentanspruch 1 sowie durch ein Verfahren nach dem Patentanspruch 16 gelöst.

**Die Erfindung betrifft ein** Verfahren zum Bestimmen wenigstens einerAktivierungsgräße für ein in wenigstens zwei Betriebszuständen betreibbares Sicherungsmittel in einem Fahrzeug, wobei der Betriebszustand des Sicherungsmittels in Abhängigkeit von einem Ergebnis eines Vergleichs der Aktivierungsgröße mit einem vorgegebenen Schwellenwert veränder**t wird**, wobei mittels eines Umfeldsensors Objektdaten wenigstens eines Objekts im Umfeld des Fahrzeugs erfasst werden und wobei die Objektdaten eine Position des Objekts, eine Geschwindigkeit des Objekts und eine Bewegungsrichtung des Objekts umfassen, wobei aus den Objektdaten eine erste Trajektorie des Objekts bestimmt wird, die zur Ermittlung einer ersten Zeitdauer bis zu einem spätesten Zeitpunkt, zu dem ein Fahrmanöver zur Vermeidung einer Kollision mit dem Objekt einzuleiten ist, herangezogen wird, und dass die Aktivierungsgröße in Abhängigkeit von der ersten Zeitdauer bestimmt wird, wobei eine zweite Zeitdauer bis zu einem spätesten Zeitpunkt, zu dem ein Abbremsen des Fahrzeugs eingeleitet werden muss, um eine Kollision mit dem Objekt zu vermeiden sowie eine dritte Zeitdauer bis zu einem spätesten Zeitpunkt, zu dem eine Lenkbewegung eingeleitet werden muss, um eine Kollision mit dem Objekt zu vermeiden, ermittelt werden und die erste Zeitdauer als Maximum der zweiten Zeitdauer und der dritten Zeitdauer bestimmt wird.

**Die Erfindung betrifft ferner ein** Verfahren zum Steuern eines in wenigstens zwei Betriebszuständen betreibbaren Sicherungsmittels in einem Fahrzeug, bei dem mittels eines Umfeldsensors Objektdaten wenigstens eines Objekts im Umfeld des Fahrzeugs erfasst werden, wobei die Objektdaten eine Position des Objekts, eine Geschwindigkeit des Objekts und eine Bewegungsrichtung des Objekts umfassen, wobei aus den Objektdaten eine erste Trajektorie des Objekts bestimmt wird, die zur Ermittlung einer ersten Zeitdauer bis zu einem spätesten Zeitpunkt, zu dem ein Fahrmanöver zur Vermeidung einer Kollision mit dem Objekt einzuleiten ist, herangezogen wird, und dass die Aktivierungsgröße in Abhängigkeit von der ersten Zeitdauer bestimmt wird, wobei eine zweite Zeitdauer bis zu einem spätesten Zeitpunkt, zu dem ein Abbremsen des Fahrzeugs eingeleitet werden muss, um eine Kollision mit dem Objekt zu vermeiden sowie eine dritte Zeitdauer bis zu einem spätesten Zeitpunkt, zu dem eine Lenkbewegung eingeleitet werden muss, um eine Kollision mit dem Objekt zu vermeiden, ermittelt werden und die erste Zeitdauer als Maximum der zweiten Zeitdauer und der dritten Zeitdauer bestimmt wird, die Trajektorie zur Ermittlung einer ersten Größe herangezogen wird, wobei ein Betriebszustand des Sicherungsmittels in Abhängigkeit von einem Ergebnis eines Vergleichs der ersten Größe mit einem vorgegebenen Schwellenwert verändert wird, und die Trajektorie zur Bestimmung einer zweiten Größe herangezogen wird, wobei der Schwellenwert in Abhängigkeit von der zweiten Größe bestimmt wird.

Der Begriff "Sicherungsmittel" bezieht sich dabei auf alle Maßnahmen, die einerseits den Fahrer bei der Beurteilung der Gefahrensituation und Vermeidung des möglichen Unfalls unterstützen und/oder die andererseits zur Verringerung der Folgen eines möglichen Unfalls für die Insassen des Fahrzeugs beitragen. Zur Beurteilung und Vermeidung kann insbesondere eine Warnung vor einer möglichen Gefahrensituation, als auch eine automatische oder unterstützende Abbremsung des Fahrzeugs gefasst werden. Insbesondere sind unter einem reversiblen Sicherungsmittel, die oben erwähnten Insassenschutzmittel zu verstehen, d.h. bei dem Sicherungsmittel kann es sich insbesondere um einen reversiblen motorisierten Gurtstraffer, einen elektrischen Fensterheber, eine elektrische Stellvorrichtung für ein Schiebedach oder eine elektrische Sitzverstellung handeln. Weiterhin kann es sich um aktive Kopfstützen oder elektrische Kniepolster handeln.

Der späteste Zeitpunkt, zu dem ein Fahrmanöver zur Kollisionsvermeidung eingeleitet werden muss, entspricht dem Zeitpunkt, nach dem eine Kollision zwischen dem Fahrzeug und dem Objekt nicht mehr vermeidbar ist, wenn sich das Fahrzeug zu diesem Zeitpunkt auf einem Kollisionskurs mit dem Objekt befindet. Ein Vorteil der Erfindung ist es somit, dass die Aktivierungsgröße aus der Zeitdauer bestimmt wird, die bis zum Erreichen dieses Zeitpunktes verbleibt, so dass die Steuerung vorausschauend erfolgen und der Verkehrssituation besonders gut angepasst werden kann. Die Bewertung der Verkehrssituation orientiert sich damit an der von dem Fahrer des Fahrzeugs vorgenommenen Bewertung.

Damit kann einerseits die Sicherheit der Fahrzeuginsassen zuverlässig erhöht werden und andererseits kann die Steuerung des Sicherungsmittels anhand der Aktivierungsgröße für die Insassen des Fahrzeugs gut nachvollziehbar vorgenommen werden. Eine Beeinträchtigung der Insassen und insbesondere des Fahrers durch ein unerwartetes Auslösen des Sicherungsmittels kann so bei einem bestmöglichen Insassenschutz vermieden werden.

Als Fahrmanöver zur Vermeidung einer Kollision mit dem Objekt kommen insbesondere ein Abbremsen des Fahrzeugs und ein Ausweichmanöver in Betracht, das durch eine Lenkbewegung eingeleitet wird.

In der Erfindung ist es daher vorgesehen, dass eine zweite Zeitdauer bis zu einem spätesten Zeitpunkt, zu dem ein Abbremsen des Fahrzeugs eingeleitet werden muss, um eine Kollision mit dem Objekt zu vermeiden sowie eine dritte Zeitdauer bis zu einem spätesten Zeitpunkt, zu dem eine Lenkbewegung zu beginnen ist, um eine Kollision mit dem Objekt zu vermeiden, ermittelt werden und dass die erste Zeitdauer als Maximum der zweiten Zeitdauer und der dritten Zeitdauer bestimmt wird.

In einer weiteren bevorzugten Ausführungsform der Erfindung ist es vorgesehen, dass eine zweite Trajektorie eines weiteren Objekts bestimmt wird, dass ein Schnittpunkt der zweiten Trajektorie und einer vorderen Fahrzeugbegrenzungslinie sowie eine vierte Zeitdauer bis zu einem Zeitpunkt, zu dem das Objekt die vordere Fahrzeugbegrenzungslinie erreicht, bestimmt werden und dass die dritte Zeitdauer bei der Maximalwertbildung nicht berücksichtigt wird, wenn der Abstand zwischen dem Schnittpunkt der zweiten Trajektorie und der vorderen Fahrzeugbegrenzungslinie und einer Fahrzeuglängsachse kleiner als ein vorgegebener Sicherheitsabstand ist und wenn die vierte Zeitdauer kleiner als ein vorgegebener Schwellenwert ist.

Hierdurch können Ausweichmanöver im Hinblick darauf bewertet, ob genügend Raum für ein Ausweichen zur Verfügung steht. Ausweichmanöver zur Vermeidung der Kollision zwischen dem Fahrzeug und dem Objekt, die zu einer Kollision des Fahrzeugs mit einem weiteren Objekt führen können, werden erkannt und bei der Bestimmung der dritten Zeitdauer nicht berücksichtigt, wodurch die Anpassung der Steuerung an die Verkehrssituation weiter verbessert wird.

Vorzugsweise erfolgt die Bewertung der möglichen Ausweichmanöver für ein Ausweichmanöver in beide Fahrzeugquerrichtungen, d.h. nach rechts und nach links, getrennt voneinander.

In einer vorteilhaften Ausführungsform der Erfindung ist daher vorgesehen, dass die dritte Zeitdauer als das Maximum einer Zeitdauer $\Delta t_{pcu,st,l}$ bis zu einem spätestens Zeitpunkt, zu dem eine Lenkbewegung für ein Ausweichen in eine erste Fahrzeugquerrichtung zu beginnen ist, um eine Kollision mit dem Objekt zu vermeiden und einer Zeitdauer $\Delta t_{pcu,st,r}$ bis zu einem spätesten Zeitpunkt, zu dem eine Lenkbewegung für ein Ausweichen in eine zweite Fahrzeugquerrichtung zu beginnen ist, um eine Kollision mit dem Objekt zu vermeiden, ermittelt wird.

Ferner ist es in einer vorteilhaften Ausführungsform der Erfindung vorgesehen, dass die Zeitdauer $\Delta t_{pcu,st,l}$ bei der Maximalwertbildung zur Bestimmung der dritten Zeitdauer nicht berücksichtigt wird, wenn der Schnittpunkt der zweiten Trajektorie und der vorderen Fahrzeugbegrenzungslinie in einem Kollisionsvermeidungsgebiet liegt und die vierte Zeitdauer kleiner als der vorgegebene Schwellenwert ist, wobei das Kollisionsvermeidungsgebiet durch einen Abstand eines in der ersten Fahrzeugquerrichtung liegenden Punktes der vorderen Fahrzeugbegrenzungslinie von der Fahrzeuglängsachse definiert ist.

Ferner ist es in einer vorteilhaften Ausführungsform der Erfindung vorgesehen, dass die Zeitdauer $\Delta t_{pcu,st,r}$ bei der Maximalwertbildung zur Bestimmung der dritten Zeitdauer nicht berücksichtigt wird, wenn der Schnittpunkt der zweiten Trajektorie und der vorderen Fahrzeugbegrenzungslinie in einem Kollisionsvermeidungsgebiet liegt und die vierte Zeitdauer kleiner als der vorgegebene Schwellenwert ist, wobei das Kollisionsvermeidungsgebiet durch einen Abstand eines in der zweiten Fahrzeugquerrichtung liegenden Punktes der vorderen Fahrzeugbegrenzungslinie von der Fahrzeuglängsachse definiert ist.

Da Umfeldsensoren in der Regel keine oder nur eine sehr ungenaue Bestimmung der Ausdehnung von im Umfeld des Fahrzeugs befindlichen Objekten erlauben, ist es in einer weiteren vorteilhaften Ausführungsform der Erfindung vorgesehen, dass einem Abstand zwischen einem Schnittpunkt der ersten Trajektorie mit der vorderen Fahrzeugbegrenzungslinie und der Fahrzeuglängsachse eine Kollisionskurssicherheit zugeordnet wird, wobei die Kollisionskurssicherheit einer Wahrscheinlichkeit dafür entspricht, dass sich das erste Objekt und das Fahrzeug auf einem Kollisionskurs befinden. Neben dieser Ausführungsform sind auch andere Möglichkeiten zur Ermittlung einer Kollisionskurssicherheit vorgesehen, die das mögliche Verhalten des Objektes berücksichtigen und/oder mathematische Modelle zur Abschätzung der gesamten Verkehrssituation zugrunde legen.

Ferner ist in einer vorteilhaften Ausführungsform der Erfindung vorgesehen, dass aus einer Relation zwischen der ersten Zeitdauer bis zu dem spätesten Zeitpunkt, zu dem ein Fahrmanöver einzuleiten ist, um eine Kollision mit dem Objekt zu vermeiden und einer vorgegebenen weiteren Zeitdauer eine Unfallnichtvermeidungswahrscheinlichkeit ermittelt wird. Diese entspricht mit Vorteil einer Schätzung der Wahrscheinlichkeit dafür, dass der Fahrer keine Maßnahmen zur Vermeidung einer Kollision bzw. eines Unfalls einleiten wird.

Vorzugsweise wird zudem in Abhängigkeit von der Unfallnichtvermeidungswahrscheinlichkeit und der Kollisionskurssicherheit ein Gefahrenpotential für ein Objekt ermittelt. Das Gefahrenpotential ist dabei eine geschätzte Wahrscheinlichkeit für die Kollision mit dem Objekt.

In einer bevorzugten Ausführungsform der Erfindung wird das Gefahrenpotential als Aktivierungsgröße verwendet.

Vorteilhaft ist es ferner vorgesehen, dass ein Kollisionszeitpunkt berechnet wird, zu dem die Trajektorie des Objekts die vordere Fahrzeugbegrenzungslinie schneidet.

In einer weiteren bevorzugten Durchführungsform des Verfahrens ist es vorgesehen, dass der Kollisionszeitpunkt als weitere Aktivierungsgröße verwendet wird, wobei der Betriebszustand des Sicherungsmittels in Abhängigkeit von einem Ergebnis eines Vergleichs der des Kollisionszeitpunkts mit einem vorgegebenen Schwellenwert verändert wird.

In der Regel befinden sich um Umfeld des Fahrzeugs mehrere Objekte, für die unterschiedliche Gefahrenpotentiale und unterschiedliche Kollisionszeitpunkte vorliegen.

In einer vorteilhaften Ausführungsform der Erfindung ist es daher vorgesehen, dass Trajektorien für mehrere von dem Umfeldsensor erfasste Objekte bestimmt werden, die zur Ermittlung der ersten Zeitdauer für jedes der Objekte mit nicht verschwindend kleiner Kollisionskurssicherheit herangezogen werden, dass ein Minimalwert der ermittelten ersten Zeitdauern $\Delta t_{pcu}$ gebildet wird, und dass die Aktivierungsgröße $dp$, $t_{tc}$ aus dem gebildeten Minimalwert bestimmt wird.

Vorteilhaft ist vorgesehen, dass Trajektorien für mehrere von dem Umfeldsensor erfasste Objekte bestimmt werden, die zur Ermittlung der ersten Zeitdauer für jedes der Objekte mit nicht verschwindend kleiner Kollisionskurssicherheit herangezogen werden, dass ein Minimalwert der ermittelten Kollisionszeitpunkte $t_{tc}$ gebildet wird, und dass die Aktivierungsgröße $dp$ aus den Objektdaten des nach Maßgabe des Minimalwerts ausgewählten Objekts bestimmt wird.

Auf diese Weise wird die Aktivierungsgröße anhand der ersten Zeitdauer bis zu dem spätesten Zeitpunkt, zu dem ein Fahrmanöver einzuleiten ist, um eine Kollision mit demjenigen Objekt zu vermeiden, von dem die höchste Gefahr für das Fahrzeug bzw. seine Insassen ausgeht.

In einer weiteren Ausführungsform der Erfindung ist es mit den gleichen Vorteilen vorgesehen, dass ein Gefahrenpotential für jedes der mehreren von dem Umfeldsensor erfassten Objekte ermittelt wird, dass ein Maximalwert der ermittelten Gefahrenpotentiale bestimmt wird und dass der Maximalwert als Aktivierungsgröße verwendet wird.

In einer ebenfalls vorteilhaften Ausführungsform der Erfindung ist es zudem vorgesehen, dass ein Kollisionszeitpunkt für die mehreren von dem Umfeldsensor erfassten Objekte ermittelt wird, und dass der früheste ermittelte Kollisionszeitpunkt als weitere Aktivierungsgröße verwendet wird.

Es wird darüber hinaus ein Verfahren zum Steuern eines in wenigstens zwei Betriebszuständen betreibbaren Sicherungsmittels in einem Fahrzeug, bei dem mittels eines Umfeldsensors Objektdaten wenigstens eines Objekts im Umfeld des Fahrzeugs erfasst werden, wobei die Objektdaten eine Position des Objekts, eine Geschwindigkeit des Objekts und eine Bewegungsrichtung des Objekts umfassen bereitgestellte, dass sich dadurch auszeichnet, dass aus den Objektdaten eine Trajektorie des Objekts bestimmt wird, die zur Bestimmung einer ersten Größe herangezogen wird, wobei der Betriebszustand des Sicherungsmittels in Abhängigkeit von einem Ergebnis eines Vergleichs der ersten Größe mit einem vorgegebenen Schwellenwert verändert wird, und dass die erste Trajektorie für zur Bestimmung einer zweiten Größe herangezogen wird, wobei der Schwellenwert in Abhängigkeit von der zweiten Größe bestimmt wird.

Hierdurch kann der Schwellenwert, mit dem die erste Größe zur Aktivierung des Sicherungsmittels verglichen wird, anhand der zweiten Größe an die vorliegende Verkehrssituation angepasst werden. Insbesondere kann bei der Aktivierung die Art eines möglichen Unfalls berücksichtigt werden, die mittels der zweiten Größe charakterisiert werden kann.

In einer vorteilhaften Ausführungsform der Erfindung ist es dabei vorgesehen, dass es sich bei der zweiten Größe um eine Unfallschwere handelt, wobei die Unfallschwere der relativen Aufprallgeschwindigkeit des Objekts und des Fahrzeugs zugeordnet wird.

In einer weiteren vorteilhaften Ausführungsform der Erfindung ist es vorgesehen, dass es sich bei der zweiten Größe um einen Kollisionswinkel zwischen dem Fahrzeug und dem Objekt handelt.

Vorteilhaft kann es sich bei der ersten Größe um einen Kollisionszeitpunkt handeln, zu dem die Trajektorie des Objekts die vordere Fahrzeugbegrenzungslinie schneidet.

In einer bevorzugten Ausführungsform der Erfindung ist es vorgesehen, dass es sich bei der ersten Größe um eine Aktivierungsgröße handelt, die in der vorbeschriebenen Weise bestimmt wird.

In einer vorteilhaften Ausführungsform der Erfindung handelt es sich bei dem Sicherungsmittel um ein reversibles Sicherungsmittel.

In einer weiteren vorteilhaften Ausführungsform der Erfindung handelt es sich bei dem Sicherungsmittel um einen reversiblen motorisierten Gurtstraffer.

Die Erfindung stellt ferner eine Anordnung zum Bestimmen wenigstens einer Aktivierungsgröße für ein in wenigstens zwei Betriebszuständen betreibbares Sicherungsmittel in einem Fahrzeug, mit einem Umfeldsensor, der Objektdaten wenigstens eines Objekts im Umfeld des Fahrzeugs erfasst, wobei die Objektdaten eine Position des Objekts, eine Geschwindigkeit des Objekts und eine Bewegungsrichtung des Objekts umfassen, bereit, die sich dadurch auszeichnet, dass der Gefahrenrechner aus den Objektdaten eine erste Trajektorie des Objekts bestimmt, die zur Ermittlung einer ersten Zeitdauer bis zu einem spätesten Zeitpunkt, zu dem ein Fahrmanöver zur Vermeidung einer Kollision mit dem Objekt einzuleiten ist, herangezogen wird, und dass der Gefahrenrechner die Aktivierungsgröße aus der ersten Zeitdauer ermittelt.

In einer bevorzugten Ausführungsform der Erfindung ist es vorgesehen, dass der Gefahrenrechner, ein Vergleichsmittel zum Durchführen eines Vergleichs der Aktivierungsgröße mit einem Schwellenwert aufweist und dass der Gefahrenrechner ein Ergebnis des Vergleichs in ein Steuersignal zur Veränderung des Betriebszustandes des Sicherungsmittels umwandelt.

Darüber hinaus stellt die Erfindung eine Anordnung zum Steuern eines in zwei wenigstens zwei Betriebszuständen betreibbaren Sicherungsmittels in einem Fahrzeug, mit einem Umfeldsensor, der Objektdaten wenigstens eines Objekts im Umfeld des Fahrzeugs erfasst, wobei die Objektdaten eine Position des Objekts, eine Geschwindigkeit des Objekts und eine Bewegungsrichtung des Objekts umfassen, bereit, die sich dadurch auszeichnet, dass sie einen mit dem Sicherungsmittel verbundenen Gefahrenrechner umfasst, der aus den Objektdaten eine Trajektorie des Objekts bestimmt, die zur Ermittlung einer ersten und einer ersten Größe zweiten Größe herangezogen wird, dass der Gefahrenrechner aus der zweiten Größe einen Schwellenwert ermittelt, dass der Gefahrenrechner ein Vergleichsmittel zum Durchführen eines Vergleichs der ersten Größe mit dem Schwellenwert aufweist, und dass der Gefahrenrechner ein Ergebnis des Vergleichs in ein Steuersignal zur Veränderung des Betriebszustands des Sicherungsmittels umwandelt.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figuren.

Von den Figuren zeigt

Fig. 1 eine Veranschaulichung eines als Sensorsystem bezeich- neten ortsfesten Bezugssystem und insbesondere eine Veranschaulichen der Koordinatenachsen des Bezugssys- tems,

Fig. 2 ein Diagramm zur Veranschaulichung einer Klassifikati- on von Objekten,

Fig. 3 eine Veranschaulichung der Trajektorie eines Objekts und ihres Schnitts mit der vorderen Fahrzeugbegren- zungslinie,

Fig. 4a eine Veranschaulichung eines Reflexionspunktes des Sensorsignals für ein Objekt, das sich in der Fahrspur des Fahrzeugs befindet,

Fig. 4b eine Veranschaulichung eines Reflexionspunktes des Sensorsignals für ein Objekt, das gegenüber der Fahrspur des Fahrzeugs versetzt ist,

Fig. 4c      eine weitere Veranschaulichung eines Reflexionspunktes des Sensorsignals für ein Objekt, das gegenüber der Fahrspur des Fahrzeugs versetzt ist.

Fig. 5      ein Diagramm mit einer Potentialkurvenschar zum Bestimmen der Kollisionskurssicherheit,

Fig. 6      ein Diagramm zum Ermitteln einer Objektausdehnung

Fig. 7      eine Kennlinie zur Bestimmung der Unfallschwere und

Fig. 8      ein Ablaufdiagramm zur Veranschaulichung der Ansteue- rung eines RMG

Zur Ansteuerung des Sicherungsmittels wird ein Gefahrenrechner verwendet, der mittels eines Umfeldsensors gemessene Daten über Objekte, die sich Umfeld des Fahrzeugs befinden, die momentane Verkehrsituation ermittelt und zukünftige Verkehrssituationen berechnet. Die zukünftigen Verkehrssituationen werden von dem Gefahrenrechner im Hinblick auf eine mögliche Kollision zwischen dem Fahrzeug und einem der von dem Umfeldsensor erfassten Objekte bewertet, um eine situationsangepasste Steuerung des Sicherungsmittels vorzunehmen.

Bei dem Gefahrenrechner handelt es sich vorzugsweise um eine getaktet arbeitende Prozessoreinheit zur Verarbeitung der Messsignale des Umfeldsensors, die insbesondere über ein Mittel zur Durchführung von Berechnungen und einen flüchtigen und/oder nicht-flüchtigen Speicher verfügt. Die Prozessoreinheit ist ferner in der Lage, die Messsignale des Umfeldsensors und weiterer Fahrzeugsensoren zu empfangen und Steuersignale an wenigstens ein Sicherungsmittel zu übertragen.

Das Sicherungsmittel ist in einer bevorzugten Ausführungsform als reversibler motorisierter Gurtstraffer (RMG) ausgeführt, der in einem aktiven Betriebszustand einen Sicherheitsgurt mit einer einstellbaren Zugkraft beaufschlagen kann. In weiteren bevorzugten Ausführungsformen der Erfindung sind ergänzend oder alternativ zu dem RMG weitere Sicherungsmittel vorgesehen, bei denen es sich beispielsweise um einen elektrischen Fensterheber, eine elektrische Stellvorrichtung für ein Schiebedach oder eine elektrische Sitzpositionsstellvorrichtung zum automatischen Einstellen einer vorgegebenen Sitzposition eines Sitzes in dem Fahrzeug handeln kann.

Als Umfeldsensor kann im Rahmen der Erfindung grundsätzlich jede Sensoranordnung verwendet werden, mit der Positionen und Geschwindigkeiten von Objekten, die sich in einer Umgebung des Fahrzeugs befinden, ermittelt werden können. In besonders bevorzugten Ausführungsformen der Erfindung ist der Umfeldsensor dabei als Radar- bzw. Lidarsystem oder als Infrarotsensorsystem ausgeführt und erlaubt zumindest die Erfassung von Objekten, die sich in einem Bereich vor dem Fahrzeug befinden. Solche dem Fachmann bekannte Umfeldsensoren werden ebenfalls in Systemen zur Regelung des Abstands zwischen dem Fahrzeug und einem vorausfahrenden Fahrzeug eingesetzt, mit denen eine Vielzahl von Fahrzeugmodellen bereits ausgerüstet ist. Sie sind in der Regel an der Fahrzeugfront montiert und erlauben die Erfassung von Objekten, die sich in einem als spiegelsymmetrisch bezüglich der Längsachse des Fahrzeugs angeordnetes Kreissegment ausgebildeten Erfassungsbereich befinden. Die Reichweite der Frontsensoren beträgt derzeit ca. 100 m und der Öffnungswinkel des Kreissegments liegt bei ca. 16˚.

Bereits mit diesen als Frontsensoren ausgeführten Umfeldsensoren lassen sich mögliche Kollisionen des Fahrzeugs mit entgegenkommenden Objekten, wie insbesondere entgegenkommenden Fahrzeugen sowie ein mögliches Auffahren des Fahrzeugs auf ein vor ihm befindliches Objekt im Vorfeld erkennen, was besonders häufige Ursachen für Unfälle mit schweren Folgen sind. In den nachfolgend beschriebenen Ausführungsformen wird dabei beispielhaft insbesondere auf diese Situationen Bezug genommen.

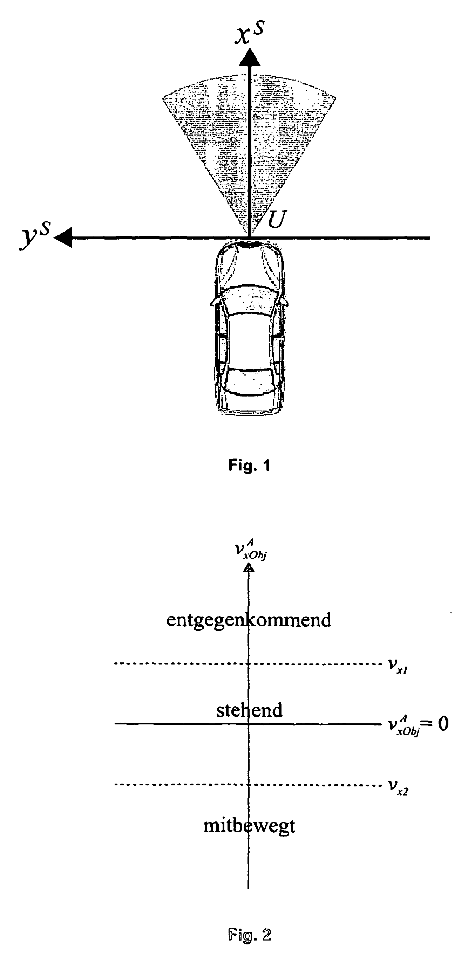

Die von dem Umfeldsensor ausgegebenen, die Position und die Geschwindigkeit der Objekte umfassenden Objektdaten erfasster Objekte beziehen sich auf ein fahrzeugfestes Bezugssystem, dessen Koordinatenachsen in der Figur 1 veranschaulicht sind und das im Folgenden als Sensorsystem bezeichnet wird. Der Ursprung U des Sensorsystems entspricht dem Eckpunkt des von dem Umfeldsensor überwachten Erfassungsbereichs, der in der Figur 1 als grau hinterlegte Fläche dargestellt ist. Die x-Achse zeigt in Fahrzeuglängsrichtung entlang der Fahrzeuglängsachse und die y-Achse in Fahrzeugquerrichtung entlang der vorderen Fahrzeugbegrenzungslinie nach links. Der hochgestellte Index S bei der Koordinatenbezeichnung deutet in der Figur und in der folgenden Beschreibung an, dass es sich um Koordinaten bzw. Koordinatenachsen im Sensorsystem handelt.

Bei den auf das fahrzeugfeste Sensorsystem bezogenen Objektdaten handelt es sich um die relative Position

$$\mathbf{r}^S_{Obj} = \left( x^S_{Obj}, y^S_{Obj} \right)$$ eines Objekts bezüglich des an der Fahrzeugfront fixierten Ursprungs des Sensorsystems sowie

um die Relativgeschwindigkeit $\mathbf{v}^S_{Obj} = \left( v^S_{xObj}, v^S_{yObj} \right)$ des Objekts bezüglich der Geschwindigkeit des Fahrzeugs. Ferner entspricht die von dem Umfeldsensor gemessene Relativposition $\mathbf{r}^S_{Obj}$ des Objekts genauer der Relativposition des Reflexionspunktes, an dem das von dem Sensor ausgesendete Signal von dem Objekt reflektiert wird, wobei diese auch im Folgenden weiterhin als Relativposition des Objekts bezeichnet wird.

Die Objektdaten werden von dem Umfeldsensor an den Gefahrenrechner übermittelt, dem neben den Objektdaten ebenfalls Bewegungsdaten des Fahrzeugs wie insbesondere der Betrag $v_F$ der Fahrzeuglängsgeschwindigkeit, der Betrag $a_F$ der Fahrzeuglängsbeschleunigung und die Gierrate $\dot{\psi}$ des Fahrzeugs zur Verfügung stehen. Diese Daten werden durch entsprechende, dem Fachmann bekannte Sensoren des Fahrzeugs wie Raddrehzahlsensoren und Gierratensensoren gemessen bzw. aus den Messsignalen der Fahrzeugsensoren bestimmt.

Anhand der Objektdaten klassifiziert der Gefahrenrechner die von dem Umfeldsensor erfassten Objekte zunächst als mitbewegte, stehende oder entgegenkommende Objekte. Dies geschieht vorzugsweise anhand der auf ein ortsfestes Bezugssystem bezogenen Absolutgeschwindigkeit $\mathbf{v}_{Obj}^A$ des Objekts.

In einer bevorzugten Ausführungsform der Erfindung wird dabei das Sensorsystem zu einem vorgegebenen Zeitpunkt als ortsfestes Bezugssystem initialisiert, so dass dieses dem Sensorsystem zu dem vorgegebenen Zeitpunkt entspricht. Die absolute Position des Fahrzeugs in diesem System, das im Folgenden als Absolutsystem bezeichnet wird, wird anhand der Bewegungsdaten des Fahrzeugs ermittelt. Um dabei die insbesondere aus Messfehlern der Fahrzeugsensoren resultierenden Fehler bei der Bestimmung der absoluten Fahrzeugposition möglichst gering zu halten, wird das Absolutsystem vorzugsweise in regelmäßigen Zeitabständen, vorzugsweise in jedem Taktschritt der Prozessoreinheit, neu initialisiert. Der Zeitpunkt der Initialisierung, d.h. der Zeitpunkt des Beginns des jeweiligen Taktschritts wird als Zeitpunkt $t_0 = 0$ definiert.

Die Klassifikation der von dem Umfeldsensor erfassten Objekte kann in dem derart gewählten Absolutsystem in einfacher Weise aus der x-Komponente $v_{xObj}^A$ der Absolutgeschwindigkeit $\mathbf{v}_{Obj}^A$ des Objekts ermittelt werden. Für diese gilt

$$v_{xObj}^A = v_F - \dot{\varphi} y_{Obj}^S + v_{xrel}^S , \qquad\qquad (1)$$

$y_{Obj}^S$ die y-Komponente des Positionsvektors des Objekts im Sensorsystem und $v_{xObj}^S$ die x-Komponente des Geschwindigkeitsvektors $\mathbf{v}_{Obj}^S$ des Objekts im Sensorsystem bezeichnet. Der Kurswinkel $\varphi$ ergibt sich dabei aus der Summe $\beta+\psi$ des Schwimmwinkels $\beta$ und der Gierrate $\psi$ des Fahrzeugs, so dass die Änderungsrate $\varphi$ des Kurswinkels $\varphi$ bei einer Vernachlässigung der Änderungsrate des Schwimmwinkels $\beta$, von der hier ausgegangen wird, aus der Gierrate $\dot{\psi}$ des Fahrzeugs ermittelt werden kann.

Die Kriterien für die Objektklassifikation sind in dem Diagramm in der Figur 2 veranschaulicht. Ein Objekt wird demnach als mitbewegtes bzw. entgegenkommendes Objekt identifiziert, wenn seine Geschwindigkeitskomponente $v_{xObj}^A$ in der x-Richtung des Absolutsystems größer als eine erste Toleranzgrenze $v_{x1}$ bzw. kleiner als eine zweite Toleranzgrenze $v_{x2}$ ist. Objekte, deren Geschwindigkeitskomponente $v_{xObj}^A$ kleiner als die erste Toleranzgrenze $v_{x1}$ und größer als die zweite Toleranzgrenze $v_{x2}$ ist, werden als stehende Objekte erkannt. Als eine vorteilhafte Wahl der ersten Toleranzgrenze hat sich dabei ein Wert von $v_{x1}=$ 2 m/s herausgestellt und eine vorteilhafte Wahl für die zweite Toleranzgrenze ist ein Wert von $v_{x2}=$ -2 m/s.

Um eine wechselnde Klassifikation von Objekten, deren Geschwindigkeitskomponente $v_{xObj}^A$ in der Nähe der Toleranzgrenzen liegt, zu vermeiden, ist es in einer bevorzugten Ausführungsform der Erfindung zudem vorgesehen, dass die Zuordnung eines Objekts zu einer Objektklasse erst dann vorgenommen wird, wenn seine Geschwindigkeitskomponente $v_{xObj}^A$ in mehreren Abtastzyklen, innerhalb eines der vorgenannten durch die Toleranzgrenzen definierten Geschwindigkeitsbereiche liegt.

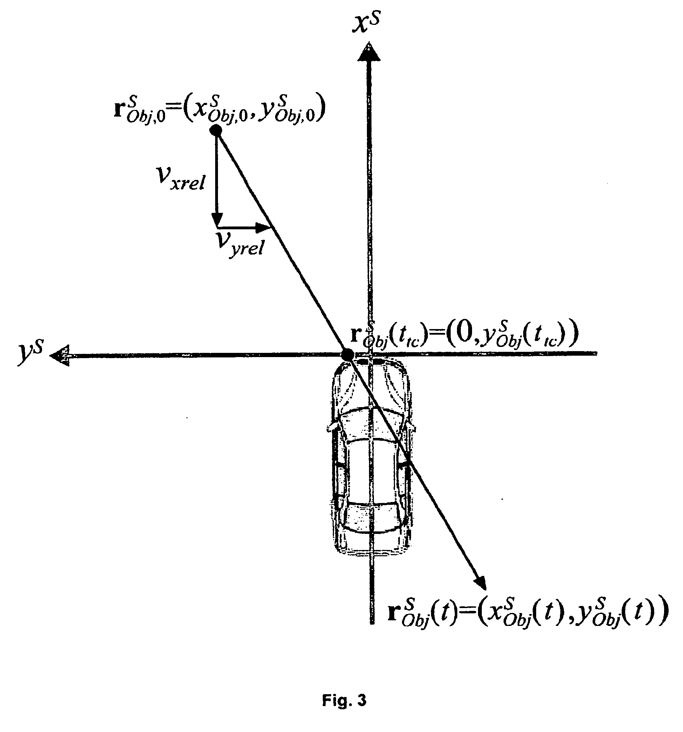

Aus den Objektdaten der in der vorbeschriebenen Weise klassifizierten Objekte berechnet der Gefahrenrechner dann die Trajektorien bzw. Bahnen der Objekte. Insbesondere werden dabei Zeitpunkte berechnet, zu denen die Trajektorien der Objekte die Fahrzeugbegrenzungslinien schneiden sowie die Schnittpunkte der Trajektorien und der Fahrzeugbegrenzungslinien. Werden dabei ausschließlich Kollisionen zwischen dem Fahrzeug und einem Objekt betrachtet, bei denen das Fahrzeug frontal mit dem Objekt zusammenstößt, so braucht dabei lediglich der Zeitpunkt $t_{tc}$ berechnet werden, zu dem die Trajektorie des Objekts die vordere Fahrzeugbegrenzungslinie schneidet, die mit der y-Achse des Sensorsystems zusammenfällt, so dass lediglich die Relativbewegung zwischen dem Fahrzeug und einem Objekt in Fahrzeuglängsrichtung, d.h. in der x-Richtung des Sensorsystems zu betrachten ist. Dieses Vorgehen ist in der Figur 3 veranschaulicht.

Die im Hinblick auf die Ansteuerung des Sicherungsmittels relevanten Fälle einer Annäherung des Fahrzeugs und eines Objekts, die von dem Gefahrenrechner bei Ermittlung der Kollisionszeit $t_{tc}$ ausgewertet werden, sind diejenigen, in denen das Fahrzeug mit konstanter Geschwindigkeit $v_F$ in Vorwärtsrichtung fährt oder bis zum Stillstand gebremst wird und in denen ein Objekt steht oder sich mit konstanter Geschwindigkeit bewegt. Beschleunigt das Fahrzeug hingegen in Richtung auf das Objekt zu, ist davon auszugehen, dass es sich um eine von dem Fahrer gewollte Annäherung handelt, so dass dieser Fall hier nicht betrachtet wird.

Für Objekte, die von dem Gefahrenrechner als stehend klassifiziert worden sind, erfolgt die Berechnung des Kollisionszeitpunktes $t_{tc}$ in einer vorteilhaften Ausführungsform der Erfindung unter Berücksichtung der bei einer Kurvenfahrt vorliegenden Rotationsbewegung des Sensorsystems bzw. des Fahrzeugs, falls das Fahrzeug nicht abgebremst wird. Die x-Komponente $x_{Obj}^{S}(t)$ der relativen Trajektorie $\mathbf{r}_{Obj}^{S}(t)$ eines stehenden Objekts im Sensorsystem kann dabei in folgender Weise durch Größen im Absolutsystem ausgedrückt werden:

$$x_{Obj}^{R}(t) = x_{Obj}^{A} \cos(v_F t/\rho) + y_{Obj}^{A} \sin(v_F t/\rho) - \rho \sin(v_F t/\rho) + l_S \cos(v_F t/\rho) - l_S \qquad (2)$$

Mit $\rho$ ist hier der Krümmungsradius der Bahn des Fahrzeugschwerpunkts bezeichnet, der aus dem Betrag $v_F$ der Fahrzeuggeschwindigkeit und (bei Vernachlässigung der Änderungsrate des Schwimmwinkels $\beta$) der Gierrate $\dot{\psi}$ des Fahrzeugs ermittelt werden kann. Die Größe $l_s$ ist der Abstand zwischen dem Ursprung des Sensorsystems und dem Fahrzeugschwerpunkt, d.h. der in Fahrzeuglängsrichtung gemessene Abstand zwischen dem Fahrzeugschwerpunkt und der Fahrzeugfront.

Da das Sensorsystem und das Absolutsystem zum Initialisierungszeitpunkt $t_0 = 0$ des Absolutsystems zusammenfallen, können zur Berechnung des Kollisionszeitpunktes $t_{tc}$ mittels Gleichung 2 für die Absolutkoordinaten $x_{Obj}^{A}$ und $y_{Obj}^{A}$ die von dem Umfeldsensor gemessenen Relativkoordinaten $x_{Obj}^{R}$ und $y_{Obj}^{R}$ eingesetzt werden. Der Kollisionszeitpunkt $t_{tc}$ ergibt sich anhand von Gleichung 2 aus der Bedingung $x_{Obj}^{S}(t_{tc}) = 0$ und wird von dem Gefahrenrechner durch einen schnellen numerischen Algorithmus iterativ ermittelt.

Die y-Komponente des Schnittpunkts $\mathbf{r}_{Obj}^{S}(t_{tc}) = \left(0, y_{Obj}^{S}(t_{tc})\right)$ der relativen Trajektorie $\mathbf{r}_{Obj}^{S}(t)$ des Objekts mit der vorderen Fahrzeugbegrenzungslinie entspricht der y-Komponente der Trajektorie zum Kollisionszeitpunkt $t_{tc}$ und ist gegeben durch

$$y_{Obj}^{S}(t_{tc}) = -x_{Obj}^{A} \sin(v_F t_{tc}/\rho) + y_{Obj}^{A} \sin(v_F t_{tc}/\rho) - \rho \cos(v_F t_{tc}/\rho) + l_S \sin(v_F t_{tc}/\rho) + \rho \qquad (3)$$

wobei auch hier für die Absolutkoordinaten $x_{Obj}^{A}$ und $y_{Obj}^{A}$ wieder die von dem Umfeldsensor gemessenen Relativkoordinaten $x_{Obj}^{R}$ und $y_{Obj}^{R}$ eingesetzt werden.

Zumindest bei der Berechnung der Trajektorien von als mitbewegt oder entgegenkommend klassifizierten Objekten wird in einer vorteilhaften Ausführungsform der Erfindung von einer geradlinigen Relativbewegung zwischen dem Fahrzeug und den Objekten ausgegangen, d.h. von einer Relativbewegung, bei welcher die Winkel zwischen der Bewegungsrichtung des Fahrzeugs und den Bewegungsrichtungen der Objekte zeitlich konstant sind. In dieser Näherung wird somit angenommen, dass sich sowohl das Fahrzeug als auch ein Objekt geradlinig bewegen und dass die Relativbewegung im Falle eines nicht verschwindenden Winkels zwischen den Bewegungsrichtungen des Fahrzeugs und des Objekts zudem gleichförmig verläuft. Ferner wird auch bei einer Bewegung eines Objekts in die Längsrichtung des Fahrzeugs oder entgegen der Längsrichtung des Fahrzeugs eine Beschleunigung des Objekts vernachlässigt, da diese in der Regel nicht oder nur sehr ungenau aus den Messsignalen des Umfeldsensors ermittelt werden kann.

Wenn das Fahrzeug nicht abgebremst wird, ermittelt der Gefahrenrechner dabei den Kollisionszeitpunkt $t_{tc}$ unter Berücksichtigung dieser Näherungen zu

$$t_{tc} = -\frac{x^S_{Obj}}{v^S_{xobj}} \cdot \qquad (4)$$

Die y-Komponente des Schnittpunkts $\mathbf{r}^S_{Obj}(t_{tc})$ der relativen Trajektorie $\mathbf{r}^S_{Obj}(t)$ des Objekts mit der vorderen Fahrzeugbegrenzungslinie ergibt sich daraus als

$$y^S_{Obj}(t_{tc}) = y^S_{Obj} + v^S_{yObj}t_{tc} \qquad (5)$$

Ergibt sich für ein mitbewegtes Fahrzeug bei der Berechnung des Kollisionszeitpunkts $t_{tc}$ mittels Gleichung 4 ein negativer Kollisionszeitpunkt $t_{tc} < 0$, so ist eine Kollision mit dem betreffenden Objekt ausgeschlossen. Die entsprechenden Objekte werden von dem Gefahrenrechner innerhalb des gleichen Taktschritts nicht mehr weiter berücksichtigt.

Wird das Fahrzeug mit einer Verzögerung von $a_F < 0$ abgebremst, wird der Kollisionszeitpunkt sowohl für mitbewegte und entgegenkommende als auch für stehende Objekt durch

$$t_{tc} = \frac{-v^S_{xObj} \pm \sqrt{v^S_{xObj} - 2a_F x^S_{Obj}}}{a_F} \qquad (6)$$

bestimmt. Die y-Komponente des Schnittpunkts $\mathbf{r}^S_{Obj}(t_{tc})$ der relativen Trajektorie $\mathbf{r}^S_{Obj}(t)$ des Objekts mit der vorderen Fahrzeugbegrenzungslinie ergibt sich hier als

$$y^S_{Obj}(t_{tc}) = y^S_{Obj} + v^S_{yObj}t_{tc} + \tfrac{1}{2} a_F t^2_{tc} \qquad (7)$$

Wenn aus Gleichung 6 kein nicht-negativer Kollisionszeitpunkt $t_{tc}$ bestimmt werden kann, so ist eine Kollision des Fahrzeugs mit dem betreffenden Objekt ausgeschlossen, und das Objekt wird von dem Gefahrenrechner innerhalb des gleichen Taktschritts nicht mehr weiter berücksichtigt.

Die y-Koordinate $y^S_{Obj}(t_{tc})$ des in der vorbeschriebenen Weise ermittelte Schnittpunkts $\mathbf{r}^S_{Obj}(t_{tc})$ der relativen Trajektorie $\mathbf{r}^S_{Obj}(t)$ eines Objekts und der vorderen Fahrzeugbegrenzungslinie verwendet der Gefahrenrechner, um eine Entscheidung darüber zu treffen, ob sich das Fahrzeug und ein Objekt auf einem Kollisionskurs befinden. Da die Ausdehnung des Objekts mittels des beschriebenen Umfeldsensors, von dessen Verwendung hier ausgegangen wird, nicht ermittelt werden kann, ist es dabei in einer vorteilhaften Ausführungsform der Erfindung vorgesehen, dass der Gefahrenrechner dafür eine Kollisionskurssicherheit $P_{ctrack}$ bestimmt, die einer Wahrscheinlichkeit für das Vorliegen des Kollisionskurses entspricht. Die Ausdehnung eines Objekts wird dabei in einem Modell geschätzt.

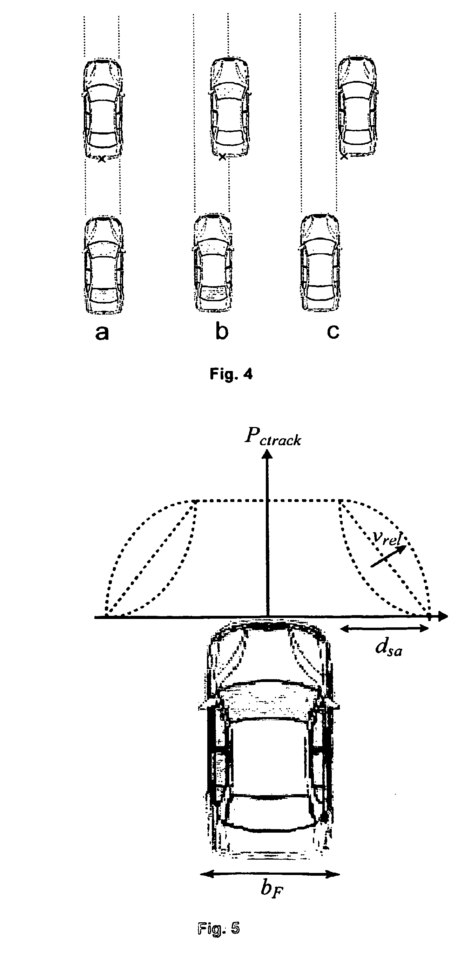

In einem einfachen Modell wird dabei davon ausgegangen, dass das Signal des Umfeldsensors in der Objektmitte reflektiert wird, d.h. dass das Objekt ausgehend von der y-Koordinate $y_{Obj}^S$ seiner durch den Umfeldsensor gemessenen Position $r_{Obj}^S$ die gleiche Ausdehnung nach links und nach rechts besitzt. Testmessungen haben jedoch ergeben, dass der Reflexionspunkt, an dem das Sensorsignal reflektiert wird, bezüglich der Objektmitte zur Mitte der Fahrspur des Fahrzeugs hin verschoben ist. Bei einem Objekt, dass sich mittig in der Fahrspur des Fahrzeugs befindet wird das Sensorsignal somit in der Objektmitte reflektiert, falls das Objekt in eine Richtung gegenüber der Fahrspur des Fahrzeugs versetzt ist, erfolgt die Reflexion an einem Punkt der gegenüber der Objektmitte in die entgegen gesetzte Richtung verschoben ist. Dies ist in den Figuren 4a, 4b und 4c für die Fälle veranschaulicht, in denen sich ein vorausfahrendes Fahrzeug in der Fahrspur des Fahrzeugs befindet (Fig. 4a) und nach links gegenüber der Fahrspur versetzt ist (Fig. 4b und 4c), wobei das Kreuz in den Figuren jeweils den Reflexionspunkt markiert.

Zur Bestimmung der Kollisionskurssicherheit $P_{ctrack}$ wird daher eine minimale Objektbreite $b_{Odj,min}$ vorgegeben, die beispielsweise für mitbewegte und entgegenkommende Objekte 2 m und für stehende Objekte 1 m beträgt.

Es ist dabei vorgesehen, eine Zuordnung zwischen dem um die minimale Objektbreite $b_{Obj,min}$ verringerten Abstand des ermittelten Schnittpunktes von der Fahrzeuglängsachse, der durch die Differenz aus dem Betrag $\left| y_{Obj}^S(t_{tc}) \right|$ der y-Koordinate $y_{Obj}^S(t_{tc})$ des Schnittpunkts und der minimalen Objektbreite $b_{Obj,min}$ gegeben ist und der Kollisionskurssicherheit $P_{ctrack}$ vorzunehmen, die anhand einer Potentialkurve oder einer Potentialkurvenschar erfolgt. Eine bevorzugte Potentialkurvenschar ist dabei in der Figur 5 schematisch veranschaulicht, wobei auf eine Beschriftung der Abstandsachse, die sich für positive und negative Werte unterscheiden würde, verzichtet wird.

Die Kollisionskurssicherheit $P_{ctrack}$ nimmt den Wert Eins an, wenn der Abstand $\left| y_{Obj}^S(t_{tc}) \right| - b_{Obj,min}$ nicht größer als die halbe Breite $b_F$ des Fahrzeugs ist und sie wird zu Null gesetzt, wenn der Abstand $\left| y_{Obj}^S(t_{tc}) \right| - b_{Obj,min}$ um wenigstens einen vorgegebenen Sicherheitsabstand $d_{sa}$ größer als die halbe Fahrzeugbreite $b_F$ ist.

Für zunehmende Abstände $\left| y_{Obj}^S(t_{tc}) \right| - b_{Obj,min}$, die innerhalb des Sicherheitsbereichs zwischen $b_F/2$ und $b_F/2+ d_{sa}$ liegen, nimmt die Kollisionskurssicherheit $P_{ctrack}$ ab. Vorzugsweise wird die Kollisionskurssicherheit $P_{ctrack}$ dabei innerhalb des Sicherheitsbereichs in Abhängigkeit von dem Betrag $v_{Obj}^S$ der relativen Geschwindigkeit $\vec{v}_{Obj}^S$ eines Objekts bestimmt, wodurch der Tatsache Rechnung getragen wird, dass die Kollisionsgefahr zunimmt, wenn sich das Fahrzeug und das Objekt mit höherer Geschwindigkeit nähern. Dies liegt insbesondere daran, dass bei höheren Geschwindigkeiten bereits geringe Lenkbewegungen Auswirkungen auf den Kollisionskurs haben.

Beispielhaft kann die Kollisionskurssicherheit für die linke Fahrzeugseite, d.h. für $y_{Obj}^S(t_{tc}) - b_{Obj,min} > 0$ gegeben sein durch

$$P_{ctrack} = \begin{cases} 1 & , y_{Obj}^S(t_{tc}) - b_{Obj,min} < b_F/2 \\ \left( 1 - \dfrac{y_{Obj}^S(t_{tc}) - b_{Obj,min} - b_F/2}{d_{sa} + b_F/2} \right)^{2,5-2k_v} & , b_F/2 \leq y_{Obj}^S(t_{tc}) - b_{Obj,min} < b_F/2 + d_{sa} \\ 0 & , b_F/2 + d_{sa} < y_{Obj}^S(t_{tc}) - b_{Obj,min} \end{cases}$$

wobei der Scharparameter $k_v$, anhand vorgegebener Parameter $v_{min}$ und $v_{max}$ aus der relativen Geschwindigkeit $v_{Obj}^S$ des Objekts bestimmt wird:

$$k_v = \begin{cases} \dfrac{v^S_{Obj}}{v_{max}} & , \; v_{min} < v^S_{Obj} < v_{max} \\ 0 & \text{sonst} \end{cases}$$

Ferner ermittelt der Gefahrenrechner für jedes von dem Umfeldsensor erfasste Objekt, für das eine von Null verschiedene Kollisionskurssicherheit $P_{ctrack}$ ermittelt worden ist, die Zeitdauer $\Delta t_{pcu}$, die dem Fahrer des Fahrzeugs maximal verbleibt, um ein Fahrmanöver zur Vermeidung einer Kollision mit dem Objekt einzuleiten. Diese entspricht der Zeitdauer bis zu einem Zeitpunkt, nach dem eine Kollision nicht mehr durch das Einleiten eines Fahrmanövers zu vermeiden ist. Als Fahrmanöver werden dabei sowohl Bremsmanöver als auch Ausweichmanöver zur Kollisionsvermeidung betrachtet.

Für die Zeitdauer $\Delta t_{pcu,br}$, nach der spätestens ein Abbremsen des Fahrzeugs begonnen werden muss, um eine Kollision mit einem Objekt zu vermeiden, gilt dabei

$$\Delta t_{pcu,br} = -\frac{x^S_{Obj,0}}{v_{rel,0}} - \frac{v_{rel,0}}{2 a_{F,max}}, \qquad\qquad (8)$$

Straße statt (dies entspricht einem Reibwert von $\mu = 1$ und befinden sich die Reifen des Fahrzeugs dabei an der Kraftschlussgrenze, ergibt sich dabei ein theoretisch möglicher Wert von $a_{F,max} = 10$ m/s, der vorzugsweise auch bei der Berechnung der Zeitdauer $\Delta t_{pcu,br}$ zugrunde gelegt wird. Zwar wird dieser Wert bei einer Vollbremsung in der Regel aufgrund einer nicht-idealen Bremskraftverteilung und vor allem aufgrund eines kleineren vorliegenden Reibwerts $\mu$ nicht erreicht, er erlaubt jedoch eine sichere Aussage über die Zeitdauer $\Delta t_{pcu,br}$, nach der eine Kollision nicht mehr durch ein Abbremsen des Fahrzeugs vermieden werden kann.

Bei der Bestimmung der Zeitdauer $\Delta t_{pcu,st}$ bis zu dem spätesten Zeitpunkt, zu dem ein Ausweichmanöver durch den Fahrer einzuleiten ist, um eine Kollision mit einem Objekt zu verhindern, wird angenommen, dass das Ausweichmanöver keine Auswirkungen auf den Kollisionszeitpunkt $t_{tc}$ hat. Diese Annahme ist in der Regel berechtigt, da in der Längsrichtung des Fahrzeugs in der Regel deutlich höhere Geschwindigkeiten vorliegen als in der Fahrzeugquerrichtung. Die Zeitdauer $\Delta t_{pcu,st}$ kann damit als Differenz zwischen dem Kollisionszeitpunkt $t_{tc}$ und einer Zeitdauer $\Delta t_{st}$ berechnet werden, die benötigt wird, um einen zum Ausweichen benötigten Querversatz des Fahrzeugs herbeizuführen.

Wie auch die Zeitdauer $\Delta t_{pcu,br}$ wird die Zeitdauer $\Delta t_{pcu,st}$ als die maximal verbleibende Zeitdauer bestimmt, bis zu der das Fahrmanöver eingeleitet werden muss, so dass die Zeitdauer $\Delta t_{st}$ der minimalen für ein Ausweichen benötigten Zeitdauer entspricht und unter Zugrundelegung einer maximal möglichen Querbeschleunigung des Fahrzeugs berechnet wird. Die maximale Querbeschleunigung, die während eines Ausweichmanövers auftritt, wird jedoch bei dem Lenkwinkelübergang, der sich infolge der Lenkbewegung ergibt, die der Fahrer zur Durchführung des Ausweichmanövers ausführt, erst mit der Zeit aufgebaut. Ferner führt die Lenkwinkeländerung zu einer Drehbewegung des Fahrzeugs um die Hochachse, die einerseits die Querbeschleunigung verringert, aber andererseits die Fahrzeuggeschwindigkeit erhöht. Es wird somit hier nicht von einer maximal erreichbaren Querbeschleunigung zur Berechnung der Zeitdauer $\Delta t_{st}$ ausgegangen, sondern von einer mittleren maximalen Querbeschleunigung $\bar{a}_{y,max}$. Dabei hat sich ein Wert von $\bar{a}_{y,max} = 8$ m/s$^2$ als besonders vorteilhaft erwiesen.

Der zum Ausweichen benötigte Querversatz $\Delta y_{st}$ des Fahrzeugs wird für ein Ausweichen nach links und nach rechts getrennt ermittelt, wobei zur Bestimmung der Breite des Objekts vorzugsweise wieder das bereits beschriebene Objektmodell verwendet wird. Insbesondere wird dabei von einer unterschiedlichen lateralen Ausdehnung des Objekts links und rechts von dem Reflexionspunkt ausgegangen. Bezüglich der Objektausdehnung $b_{Obj,l}$ nach links wird von einer maximalen Ausdehnung $b_{Obj,max}$ ausgegangen, wenn die y-Koordinate $y^S_{Obj}(t_{tc})$ des Schnittpunkts der Objekttrajektorie mit der vorderen Fahrzeugbegrenzungslinie positiv und betragsmäßig größer als die halbe Fahrzeugbreite $b_F/2$ ist, und es wird von der minimalen Ausdehnung $b_{Obj,min}$ ausgegangen, wenn die y-Koordinate $y^S_{Obj}(t_{tc})$ des Schnittpunkts der Objekttrajektorie mit der vorderen Fahrzeugbegrenzungslinie negativ und betragsmäßig größer als die halbe Fahrzeugbreite $b_F/2$ ist. Falls $-b_F/2 < y^S_{Obj}(t_{tc}) < b_F/2$ ist, wird davon ausgegangen, dass die Objektausdehnung $b_{Obj,l}$ mit steigendem Wert von $y^S_{Obj}(t_{tc})$ linear abnimmt. Der Verlauf der Objektausdehnung $b_{Obj,l}$

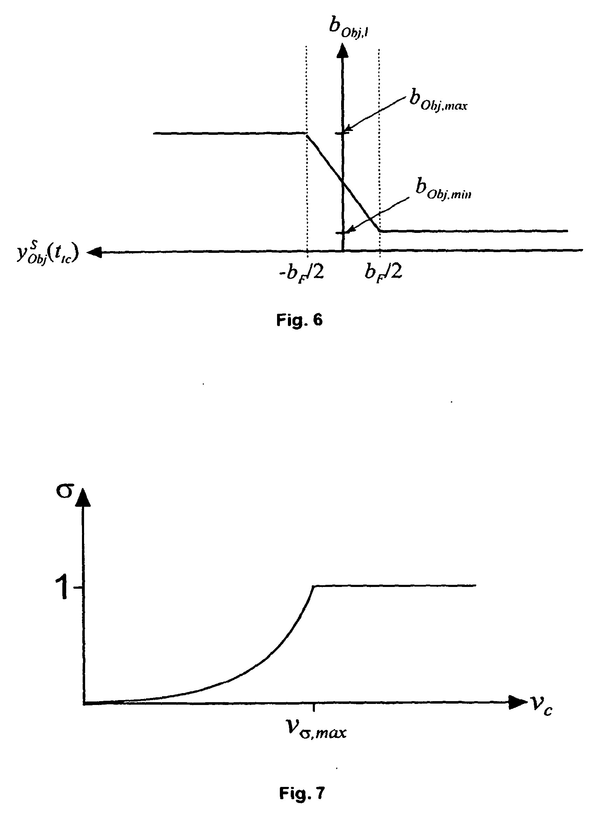

nach links ist in dem Diagramm in der Figur 6 veranschaulicht.

Die Objektausdehnung ausgehend von dem Reflexionspunkt nach rechts ergibt sich in analoger Weise. Sie lässt sich durch eine Kurve veranschaulichen, welche der in der Figur 6 dargestellten, jedoch bezüglich der senkrechten Achse gespiegelten Kurve entspricht.

Der erforderliche Querversatz $\Delta y_{st,l}$ für ein Ausweichen nach links ist damit gegeben durch

$$\Delta y_{st,l} = y_{Obj}^{S}(t_{lc}) + b_F/2 + b_{Obj,l} + D_{sa} \qquad (9)$$

wobei die Größe $D_{sa}$ ein gegebenenfalls berücksichtigter Sicherheitsabstand ist, der nach dem Ausweichen zwischen dem Fahrzeug und dem Objekt bestehen soll. Vorzugsweise wird der Sicherheitsabstand $D_{sa}$ dabei nicht größer als der Sicherheitsabstand $d_{sa}$ gewählt, da ansonsten für Objekte mit nicht verschwindender Kollisionskurssicherheit $P_{ctrack}$ negative Werte für den Querversatz $\Delta y_{st,l}$ berechnet werden könnten. Der erforderliche Querversatz $\Delta y_{st,r}$ für ein Ausweichen nach rechts ergibt sich in analoger Weise.

Weiterhin ist es vorgesehen, dass der Gefahrenrechner prüft, ob tatsächlich Raum für ein Ausweichmanöver zur Verfügung steht oder das Fahrzeug aufgrund eines Ausweichmanövers zur Vermeidung einer Kollision mit einem ersten Objekt auf einen Kollisionskurs mit einem zweiten Objekt gebracht wird. Diese Prüfung erfolgt unter der Annahme, dass der Fahrer des Fahrzeugs ein Ausweichmanöver nur dann in Betracht zieht, wenn es zu einer deutlichen Verbesserung einer Gefahrensituation führt. Eine Ausweichmöglichkeit wird daher von dem Gefahrenrechner ausgeschlossen, wenn eine Zeitdauer $\Delta t_{tc,min}$ bis zu einer möglichen Kollision mit einem weiteren Objekt in dem benötigten Ausweichbereich unterschritten wird. Beispielsweise wird diese Zeitdauer auf $\Delta t_{tc,min} = 5$ s gesetzt.

Zum Testen der Möglichkeit für ein Ausweichen nach links prüft der Gefahrenrechner zunächst in einem ersten Schritt, ob wenigstens ein Schnittpunkt einer Trajektorie eines von dem Umfeldsensor erfassten Objekts innerhalb eines vorgegeben Kollisionsvermeidungsgebietes $d_{caa}$ liegt, das durch ein vorgegebenes Intervall auf der positiven y-Achse des Sensorsystem bestimmt ist. Ein derartiger Schnittpunkt wird somit erkannt, wenn für wenigstens ein Objekt $0 \leq y_{Obj}^{R}(t_{lc}) \leq d_{caa}$ ist. Falls eine nachfolgende Überprüfung der Kollisionszeitpunkte $t_{tc}$, die für die im ersten Schritt ermittelten Objekte berechnet worden ist, ergibt, dass die Zeitdauer bis zu dem Kollisionszeitpunkt $t_{tc}$ kleiner als die Zeitdauer $\Delta t_{tc,min}$ ist, so wird die Möglichkeit eines Ausweichens nach links ausgeschlossen. Entsprechend wird zur Bewertung der Möglichkeit für ein Ausweichen nach rechts zunächst im ersten Schritt überprüft, ob für wenigstens ein Objekt $-d_{caa} \leq y_{Obj}^{R}(t_{lc}) < 0$ ist. Die Möglichkeit eines Ausweichens nach rechts wird ausgeschlossen, wenn die Zeitdauer bis zu dem Kollisionszeitpunkt $t_{tc}$ eines im ersten Schritt ermittelten Objekts kleiner als die Zeitdauer $\Delta t_{tc,min}$ ist.

Falls eine Möglichkeit für ein Ausweichen nach links nicht ausgeschlossen worden ist, wird nachfolgend für dieses Objekt eine Zeitdauer $\Delta t_{pcu,st,l}$ bis zu dem spätesten Zeitpunkt, zu dem ein Ausweichen nach links durch den Fahrer einzuleiten ist, um eine Kollision mit einem Objekt zu verhindern, bestimmt, die nach dem vorher Gesagten durch

$$\Delta t_{pcu,st,l} = t_{tc} - \sqrt{2y_{st,l}/\overline{a}_{y,max}} \qquad (10)$$

gegeben ist. Falls eine Möglichkeit für ein Ausweichen nach rechts nicht ausgeschlossen worden ist, wird für das Objekt ebenfalls eine Zeitdauer $\Delta t_{pcu,st,r}$ bis zu dem spätesten Zeitpunkt, zu dem ein Ausweichen nach rechts durch den Fahrer einzuleiten ist, um eine Kollision mit einem Objekt zu verhindern, bestimmt, die nach dem entsprechend durch

$$\Delta t_{pcu,st,l} = t_{tc} - \sqrt{2y_{st,r}/\overline{a}_{y,max}} \qquad (11)$$

gegeben ist. Die Zeitdauer $\Delta t_{pcu,st}$ bis zu dem spätesten Zeitpunkt, zu dem ein Ausweichmanöver durch den Fahrer einzuleiten ist, um eine Kollision mit einem Objekt zu verhindern, ergibt sich daraus als das Maximum der beiden von dem Gefahrenrechner ermittelten Zeitdauern $\Delta t_{pcu,st,l}$ und $\Delta t_{pcu,st,r}$:

$$\Delta t_{pcu,st} = \max\left(\Delta t_{pcu,st,l},\, \Delta t_{pcu,st,r}\right) \qquad (12)$$

Die Zeitdauer $\Delta t_{pcu}$ bis zu dem spätesten Zeitpunkt, zu dem ein Fahrmanöver von dem Fahrer des Fahrzeugs einzuleiten ist, ergibt sich als das Maximum der Zeitdauer $\Delta t_{pcu,br}$ und der Zeitdauer $\Delta t_{pcu,st}$, so dass gilt:

$$\Delta t_{pcu} = \max\left(\Delta t_{pcu,st},\, \Delta t_{pcu,br}\right) \qquad (13)$$

In einer bevorzugten Ausführungsform der Erfindung wird die derart bestimmte Zeitdauer $\Delta t_{pcu}$ dazu verwendet, eine Unfallnichtvermeidungswahrscheinlichkeit $dp_{acc}$ zu ermitteln, die eine Wahrscheinlichkeit dafür angibt, dass der Fahrer <u>kein</u> Fahrmanöver zur Kollisionsvermeidung einleiten wird. Vorzugsweise wird sie aus dem Verhältnis zwischen der Zeitdauer $\Delta t_{pcu}$ und einer weiteren Zeitdauer $\Delta t_{crit}$ in der Form

$$dp_{acc} = 1 - \frac{\Delta t_{pcu}}{\Delta t_{crit}} \qquad (14)$$

berechnet. Die Zeitdauer $\Delta t_{crit}$ entspricht dabei vorzugsweise dem gesetzlich vorgeschriebenen Mindestabstand zwischen zwei Fahrzeugen, der in Deutschland durch den halben Wert der Fahrzeuglängsgeschwindigkeit $v_F$ in Metern ("halber-Tacho-Regel") und somit durch einen zeitlichen Abstand von 1,8 s gegeben ist. Anhand der Unfallnichtvermeidungswahrscheinlichkeit $dp_{acc}$ und der Kollisionskurssicherheit $P_{ctrack}$ ermittelt der Gefahrenrechner nachfolgend für jedes von dem Umfeldsensor erfasste Objekt mit nicht verschwindender Kollisionskurssicherheit $P_{ctrack}$ ein Gefahrenpotential $dp$, das vorzugsweise als Produkt aus diesen beiden Größen berechnet wird, so dass gilt:

$$dp = dp_{acc} \cdot P_{ctrack} \qquad (15)$$

Ferner wird für jedes Objekt, für das die Kollisionskurssicherheit $P_{ctrack}$ größer als Null ist, in vorteilhaften Ausführungsformen der Erfindung eine Unfallschwere $\sigma$ ermittelt. Dabei handelt es sich um eine Größe, die Werte zwischen 0 und 1 annimmt, wobei der Wert $\sigma = 0$ dann vorliegen soll, wenn bei dem möglichen Zusammenstoß mit dem Objekt keine Gefährdung der Insassen besteht, während der Wert $\sigma = 1$ bei einem möglichen Unfall mit letalen Folgen für die Fahrzeuginsassen angenommen werden soll. Die Bestimmung der Unfallschwere $\sigma$ erfolgt vorzugsweise in Abhängigkeit von der Aufprallgeschwindigkeit $v_c$, welche dem Betrag der relativen Geschwindigkeit $\mathbf{v}_{Obj}^{S}(t)$ zwischen dem Fahrzug und dem Objekt zum Kollisionszeitpunkt $t_{tc}$ entspricht. Wird die relative Geschwindigkeit dabei als konstant angenommen, kann dabei der Betrag $v_{Obj}^{S}$ der von dem Umfeldsensor gemessenen relativen Geschwindigkeit $\mathbf{v}_{Obj}^{S}$ zugrunde gelegt werden.

Die Zuordnung zwischen Aufprallgeschwindigkeit $v_c$ bzw. dem Betrag $v_{Obj}^{S}$ der relativen Objektgeschwindigkeit $\mathbf{v}_{Obj}^{S}$ und der Unfallschwere $\sigma$ erfolgt dabei anhand einer Kennlinie, wie sie beispielhaft in dem Diagramm in der Figur 7 veranschaulicht ist. Für Werte der relativen Aufprallgeschwindigkeit $v_c$, die größer als ein vorgegebener Schwellenwert sind, nimmt die Unfallschwere $\sigma$ dabei den Wert Eins an. Für kleinere Werte der Aufprallgeschwindigkeit $v_c$ steigt die Unfallschwere $\sigma$ vorzugsweise quadratisch an, da die kinetische Energie, die bei einem Unfall umgesetzt wird, ebenfalls quadratisch mit der relativen Aufprallgeschwindigkeit $v_c$ ansteigt.

Eine weitere Charakterisierung einer möglichen Kollision zwischen dem Fahrzeug und einem Objekt, wird zudem durch die Berechnung des Kollisionswinkels $\theta$ möglich, bei dem es sich um den Winkel zwischen der vorderen Fahrzeugbegrenzungslinie bzw. der y-Achse des Sensorsystems und der Bewegungsrichtung des Objekts zum Kollisionszeitpunkt $t_{tc}$ handelt. Für Objekte, die als stehend klassifiziert worden sind, ist bei einer Kollision von einem Frontalaufprall auszugehen, so dass für diese Objekte immer ein Kollisionswinkel von $\theta=\pi/2$ bestimmt wird. Für Objekte, die.als mitbewegt oder entgegenkommend klassifiziert worden sind, bestimmt der Gefahrenrechner unter Verwendung der bereits im Zusammenhang mit der Berechnung der Trajektorien der Objekte dargestellten Näherungen in der Form

$$\theta = \arctan\frac{v^A_{xObj}}{v^A_{yObj}} \qquad\qquad (16)$$

wobei hier die in der Gleichung 1 angegebene x-Komponente $v^A_{xObj}$ der Absolutgeschwindigkeit des Objekts zur Berechnung verwendet wird. Der analoge Ausdruck für die y-Komponente $v^A_{yObj}$ lautet

$$v^A_{yObj} \approx l_s\dot{\varphi} + \dot{\varphi}x^R_{xObj} + v^R_{yObj} \qquad\qquad (17)$$

Die vorbeschriebenen Größen werden für jedes von dem Umfeldsensor erfasste Objekt bzw. für jedes erfasste Objekt mit einer von Null verschiedenen Kollisionskurssicherheit $P_{ctrack}$ ermittelt. Nach der erfolgten Berechnung der Größen ermittelt der Gefahrenrechner das Objekt, von dem die größte Gefahr für das Fahrzeug bzw. seine Insassen ausgeht. In bevorzugten Ausführungsformen der Erfindung wird dabei von dem Gefahrenrechner dasjenige Objekt ermittelt, für welches das höchste Gefahrenpotential $dp$ oder die kleinste Kollisionszeit $t_{tc}$ berechnet worden sind. Die Ansteuerung der Sicherungsmittel und insbesondere des RMG erfolgt dann in Abhängigkeit von den Größen, die für das Objekt berechnet worden sind, das von dem Gefahrenrechner als dasjenige Objekt identifiziert worden ist, von dem die höchste Gefahr ausgeht.

In einer vorteilhaften Ausgestaltung der Erfindung werden dabei neben dem deaktivierten Betriebszustand des RMG, in dem dieser keine Kraft auf den Sicherheitsgurt ausübt, drei weitere Betriebszustände vorgesehen, in denen die von dem RMG zum Spannen des Sicherheitsgurtes aufgewendete Zugkraft 50 N, 150 N und 250 N beträgt, so dass die Ansteuerung dreistufig erfolgt. Die Kraftstufen werden dabei im Folgenden als erste, zweite und dritte Stufe bezeichnet.

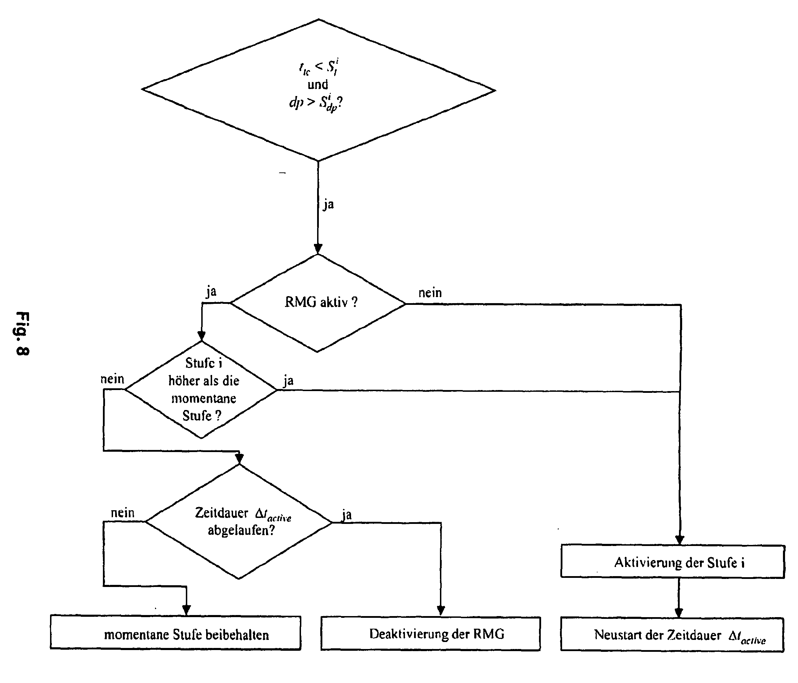

Die Ansteuerung des RMG ist in dem Diagramm in der Figur 8 veranschaulicht. Zur Aktivierung des RMG wird dabei von dem Gefahrenrechner zunächst anhand von Messsignalen eines entsprechenden Sensors ermittelt, welcher der in dem Fahrzeug vorhandenen mit einem RMG ausgerüsteten Sicherheitsgurte in dem zugehörigen Gurtschloss eingerastet ist. Die i-te Stufe der RMG der eingerasteten Sicherheitsgurte wird von dem Gefahrenrechner aktiviert, wenn der für das gefährlichste Objekt berechnete Kollisionszeitpunkt $t_{tc}$ einen Schwellenwert $S^i_t$ unterschreitet und wenn das für dieses Objekt berechnete Gefahrenpotential $dp$ einen Schwellenwert $S^i_{dp}$ überschreitet. Die Schwellenwerte werden vorzugsweise in Abhängigkeit von der für das gefährlichste Objekt berechneten Unfallschwere $\sigma$ und vom dem für das gefährlichste Objekt berechneten Kollisionswinkel $\theta$ vorgegeben.

Vorzugsweise gilt dabei

$$S^i_t = t^i_{base} + \eta^i_\sigma\sigma - \eta^i_\theta\left(1 - \sin\theta\right)$$

und

$$S^i_{dp} = 1 - \left(1 - dp^i_{min}\right)\sigma\sin\theta$$

Die Größe $t^i_{base}$ gibt dabei den Basisschwellenwert zur Aktivierung der Kraftstufe i des Gurtstraffers an, und beträgt beispielsweise $t_{base}^1 = 720$ $\mathbf{ms}$ für die Aktivierung der ersten Stufe, $t_{base}^2 = 520$ $\mathbf{ms}$ für die Aktivierung der zweiten Stufe und $t_{base}^3$ zur Aktivierung der dritten Stufe. Die weiteren Beiträge zu dem Schwellenwert $S_t^i$ berücksichtigen die berechnete Unfallschwere σ und den Kollisionswinkel θ, die durch Parameter $\eta_\sigma^i$ und $\eta_\theta^i$ gewichtet werden. Die Schwellenwerte $S_{dp}^i$ werden insbesondere anhand vorgegebener Basis-Gefahrenpotentiale $dp_{min}^i$ bestimmt.

Nach der erfolgten Aktivierung einer ersten Kraftstufe wird eine höhere Stufe aktiviert, sobald die Bedingungen zu ihrer Aktivierung erfüllt sind. Wenn jedoch der Kollisionszeitpünkt $t_{tc}$ den $S_t^i$ Schwellenwert überschreitet und/oder das Gefahrenpotential $dp$ den Schwellenwert $S_{dp}^i$ unterschreitet, während die i-te Stufe des Gurtstraffers aktiviert ist, so bleibt diese Stufe noch während einer Zeitdauer $\Delta t_{active}$ von beispielsweise 3 s aktiviert. Hierdurch wird insbesondere verhindert, dass ein aktivierter Gurtstraffer während eines Fahrmanövers zur Kollisionsvermeidung deaktiviert wird, wodurch der Fahrer des Fahrzeugs erheblich irritiert und bei der Durchführung des Manövers beeinträchtigt werden würde. Falls der Kollisionszeitpunkt $t_{tc}$ kleiner als der Schwellenwert $S_t^i$ ist und falls das Gefahrenpotential größer als der Schwellenwert ist, überprüft der Gefahrenrechner daher zunächst, wie in der Figur 8 veranschaulicht, ob die RMG aktiv sind. Ist dies nicht Fall, aktiviert er die Stufe i der RMG. Falls die RMG aktiv sind, wird in einem nächsten Überprüfungsschritt überprüft, ob die Stufe i höher als die momentan aktivierte Stufe ist, und aktiviert die Stufe i, falls dies der Fall ist. Wenn die Stufe i jedoch kleiner als die momentan aktivierte Stufe ist, so wird in einem weiteren Überprüfungsschritt geprüft, ob die Zeitdauer $\Delta t_{active}$, die mit der Aktivierung einer Stufe beginnt, abgelaufen ist. Ist dies der Fall, werden die RMG deaktiviert. Wenn die Zeitdauer $\Delta t_{active}$ nicht abgelaufen ist, wird die momentane Stufe beibehalten.

Als weitere Sicherungsmittel können, wie bereits erwähnt elektrische Fensterheber, mit denen Fenster des Fahrzeugs rechtzeitig vor einem möglichen Unfall geschlossen werden können, elektrische Stellvorrichtung zum Schließen eines Schiebedachs des Fahrzeugs, und/oder automatische Sitzverstellungen, welche die Sitze in dem Fahrzeug in eine günstige aufrechte Situation bringen, verwendet werden. Dabei handelt es sich um Sicherungsmittel die in einem inaktiven und einem aktiven Zustand betrieben werden können.

Die Ansteuerung dieser Sicherungsmittel erfolgt daher einstufig in Abhängigkeit eines Vergleichs des Kollisionszeitpunktes $t_{tc}$ und/oder des Gefahrenpotentials $dp$ des Objekts, welches als das Objekt eingestuft worden ist, das die höchste Gefahr birgt. Insbesondere werden dabei für jedes der weiteren Sicherungsmittel Schwellenwerte für den Kollisionszeitpunkt $t_{tc}$ und/oder des Gefahrenpotentials $dp$ vorgegeben, wobei die Aktivierung eines Sicherungsmittel erfolgt, wenn der Kollisionszeitpunkt $t_{tc}$ kleiner als der entsprechende Schwellenwert und/oder das Gefahrenpotential $dp$ größer als der entsprechende Schwellenwert ist.

## Patentansprüche

1. Verfahren zum Bestimmen wenigstens einer Aktivierungsgröße für ein in wenigstens zwei Betriebszuständen betreibbares Sicherungsmittel in einem Fahrzeug, wobei der Betriebszustand des Sicherungsmittels in Abhängigkeit von einem Ergebnis eines Vergleichs der Aktivierungsgröße mit einem vorgegebenen Schwellenwert verändert wird, wobei mittels eines Umfeldsensors Objektdaten wenigstens eines Objekts im Umfeld des Fahrzeugs erfasst werden und wobei die Objektdaten eine Position des Objekts, eine Geschwindigkeit des Objekts und eine Bewegungsrichtung des Objekts umfassen, wobei

  a) aus den Objektdaten $(\mathbf{r}_{Obj}^S, \mathbf{v}_{Obj}^S)$ eine erste Trajektorie $(\mathbf{r}_{Obj}^S(t))$ des Objekts bestimmt wird, die zur Ermittlung einer ersten Zeitdauer ($\Delta t_{pcu}$) bis zu einem spätesten Zeitpunkt, zu dem ein Fahrmanöver zur Vermeidung einer Kollision mit dem Objekt einzuleiten ist, herangezogen wird, und dass die Aktivierungsgröße ($dp$) in Abhängigkeit von der ersten Zeitdauer bestimmt $\Delta t_{pcu}$ wird, wobei

  b) eine zweite Zeitdauer ($\Delta t_{pcu,br}$) bis zu einem spätesten Zeitpunkt, zu dem ein Abbremsen des Fahrzeugs eingeleitet werden muss, um eine Kollision mit dem Objekt zu vermeiden sowie
  c) eine dritte Zeitdauer ($\Delta t_{pcu,st}$) bis zu einem spätesten Zeitpunkt, zu dem eine Lenkbewegung eingeleitet werden muss, um eine Kollision mit dem Objekt zu vermeiden, ermittelt werden und

d) die erste Zeitdauer ($\Delta t_{pcu}$) als Maximum der zweiten Zeitdauer ($\Delta t_{pcu,br}$) und der dritten Zeitdauer ($\Delta t_{pcu,st}$) bestimmt wird.

2. Verfahren nach Anspruch 1,
   **dadurch gekennzeichnet,**

   **dass** eine zweite Trajektorie $(\mathbf{r}_{Obj}^{S}(t))$ eines weiteren Objekts bestimmt wird, dass ein Schnittpunkt $(\mathbf{r}_{Obj}^{S}(t_{tc}))$

   der zweiten Trajektorie $(\mathbf{r}_{Obj}^{S}(t))$ und einer vorderen Fahrzeugbegrenzungslinie sowie eine vierte Zeitdauer bis zu einem Zeitpunkt ($t_{tc}$), zu dem das Objekt die vordere Fahrzeugbegrenzungslinie erreicht, bestimmt werden und dass die dritte Zeitdauer ($\Delta t_{pcu,st}$) bei der Maximalwertbildung zur Bestimmung der ersten Zeitdauer ($\Delta t_{pcu}$) nicht berücksichtigt wird, wenn der Abstand zwischen dem Schnittpunkt der zweiten Trajektorie $(\mathbf{r}_{Obj}^{S}(t))$ und der vorderen Fahrzeugbegrenzungslinie und einer Fahrzeuglängsachse kleiner als ein vorgegebener Sicherheitsabstand ist und wenn die vierte Zeitdauer kleiner als ein vorgegebener Schwellenwert ($\Delta t_{pcu,min}$) ist.

3. Verfahren nach einem der vorangegangenen Ansprüche,
   **dadurch gekennzeichnet,**
   **dass** die dritte Zeitdauer ($\Delta t_{pcu,st}$) als das Maximum einer Zeitdauer $\Delta t_{pcu,st,l}$ bis zu einem spätestens Zeitpunkt, zu dem eine Lenkbewegung für ein Ausweichen in eine erste Fahrzeugquerrichtung zu beginnen ist, um eine Kollision mit dem Objekt zu vermeiden und einer Zeitdauer $\Delta t_{pcu,st,r}$ bis zu einem spätesten Zeitpunkt, zu dem eine Lenkbewegung für ein Ausweichen in eine zweite Fahrzeugquerrichtung zu beginnen ist, um eine Kollision mit dem Objekt zu vermeiden, ermittelt wird.

4. Verfahren nach einem der vorangegangenen Ansprüche,
   **dadurch gekennzeichnet,**
   **dass** die Zeitdauer $\Delta t_{pcu,st,l}$ bei der Maximalwertbildung zur Bestimmung der dritten Zeitdauer ($\Delta t_{pcu,st}$) nicht berücksichtigt wird, wenn der Schnittpunkt $(\mathbf{r}_{Obj}^{S}(t_{tc}))$ der zweiten Trajektorie $(\mathbf{r}_{Obj}^{S}(t))$ und der vorderen Fahrzeugbegrenzungslinie in einem Kollisionsvermeidungsgebiet liegt und die vierte Zeitdauer kleiner als der vorgegebene Schwellenwert ist, wobei das Kollisionsvermeidungsgebiet durch einen Abstand ($d_{caa}$) eines in der ersten Fahrzeugquerrichtung liegenden Punktes der vorderen Fahrzeugbegrenzungslinie von der Fahrzeuglängsachse definiert ist.

5. Verfahren nach einem der vorangegangenen Ansprüche,
   **dadurch gekennzeichnet,**
   **dass** die Zeitdauer $\Delta t_{pcu,st,r}$ bei der Maximalwertbildung zur Bestimmung der dritten Zeitdauer ($\Delta t_{pcu,st}$) nicht berücksichtigt wird, wenn der Schnittpunkt $(\mathbf{r}_{Obj}^{S}(t_{tc}))$ der zweiten Trajektorie $(\mathbf{r}_{Obj}^{S}(t))$ und der vorderen Fahrzeugbegrenzungslinie in einem Kollisionsvermeidungsgebiet liegt und die vierte Zeitdauer kleiner als der vorgegebene Schwellenwert ist, wobei das Kollisionsvermeidungsgebiet durch einen Abstand ($d_{caa}$) eines in der zweiten Fahrzeugquerrichtung liegenden Punktes der vorderen Fahrzeugbegrenzungslinie von der Fahrzeuglängsachse definiert ist.

6. Verfahren nach einem der vorangegangenen Ansprüche,
   **dadurch gekennzeichnet,**

   **dass** einem Abstand zwischen einem Schnittpunkt $(\mathbf{r}_{Obj}^{S}(t_{tc}))$ der ersten Trajektorie $(\mathbf{r}_{Obj}^{S}(t))$ mit der vorderen Fahrzeugbegrenzungslinie und der Fahrzeuglängsachse eine Kollisionskurssicherheit ($P_{ctrack}$) zugeordnet wird, wobei die Kollisionskurssicherheit ($P_{ctrack}$) einer Wahrscheinlichkeit dafür entspricht, dass sich das erste Objekt und das Fahrzeug auf einem Kollisionskurs befinden.

7. Verfahren nach einem der vorangegangenen Ansprüche,
   **dadurch gekennzeichnet,**
   **dass** aus einer Relation zwischen der ersten Zeitdauer ($\Delta t_{pcu}$) bis zu dem spätesten Zeitpunkt, zu dem ein Fahrmanöver einzuleiten ist, um eine Kollision mit dem Objekt zu vermeiden und einer vorgegebenen weiteren Zeitdauer ($\Delta t_{crit}$) eine Unfallnichtvermeidungswahrscheinlichkeit ($dp_{acc}$) ermittelt wird.

8. Verfahren nach einem der vorangegangenen Ansprüche,
   **dadurch gekennzeichnet,**
   **dass** in Abhängigkeit von der Unfallnichtvermeidungswahrscheinlichkeit ($dp_{acc}$) und der Kollisionskurssicherheit ($P_{ctrack}$) ein Gefahrenpotential ($dp$) für ein Objekt ermittelt wird.

9. Verfahren nach einem der vorangegangenen Ansprüche,
   **dadurch gekennzeichnet,**
   **dass** das Gefahrenpotential ($dp$) als Aktivierungsgröße verwendet wird.

10. Verfahren nach einem der vorangegangenen Ansprüche,
    **dadurch gekennzeichnet,**

    **dass** ein Kollisionszeitpunkt ($t_{tc}$) berechnet wird, zu dem die Trajektorie des Objekts ($\mathbf{r}_{Obj}^{S}(t)$) die vordere Fahrzeugbegrenzungslinie schneidet.

11. Verfahren nach einem der vorangegangenen Ansprüche,
    **dadurch gekennzeichnet,**
    **dass** der Kollisionszeitpunkt ($t_{tc}$) als weitere Aktivierungsgröße verwendet wird, wobei der Betriebszustand des Sicherungsmittels in Abhängigkeit von einem Ergebnis eines Vergleichs der des Kollisionszeitpunkts ($t_{tc}$) mit einem

    vorgegebenen Schwellenwert ($S_{t}^{i}$) verändert wird.

12. Verfahren nach einem der vorangegangenen Ansprüche,
    **dadurch gekennzeichnet,**

    **dass** Trajektorien ($\mathbf{r}_{Obj}^{S}(t)$) für mehrere von dem Umfeldsensor erfasste Objekte bestimmt werden, die zur Ermittlung der ersten Zeitdauer für jedes der Objekte mit nicht verschwindend kleiner Kollisionskurssicherheit herangezogen werden, dass ein Minimalwert der ermittelten ersten Zeitdauern ($\Delta t_{pcu}$) gebildet wird, und dass die Aktivierungsgröße ($dp$, $t_{tc}$) aus dem gebildeten Minimalwert bestimmt wird.

13. Verfahren nach einem der vorangegangenen Ansprüche,
    **dadurch gekennzeichnet,**

    **dass** Trajektorien ($\mathbf{r}_{Obj}^{S}(t)$) für mehrere von dem Umfeldsensor erfasste Objekte bestimmt werden, die zur Ermittlung der ersten Zeitdauer für jedes der Objekte mit nicht verschwindend kleiner Kollisionskurssicherheit herangezogen werden, dass ein Minimalwert der ermittelten Kollisionszeitpunkte ($t_{tc}$) gebildet wird, und dass die Aktivierungsgröße ($dp$) aus den Objektdaten des nach Maßgabe des Minimalwerts ausgewählten Objekts bestimmt wird.

14. Verfahren nach einem der vorangegangenen Ansprüche,
    **dadurch gekennzeichnet,**
    **dass** ein Gefahrenpotential ($dp$) für jedes der mehreren von dem Umfeldsensor erfassten Objekte ermittelt wird, dass ein Maximalwert der ermittelten Gefahrenpotentiale ($dp$) bestimmt wird und dass der Maximalwert als Aktivierungsgröße verwendet wird.

15. Verfahren nach einem der vorangegangenen Ansprüche,
    **dadurch gekennzeichnet,**
    **dass** ein Kollisionszeitpunkt ($t_{tc}$) für die mehreren von dem Umfeldsensor erfassten Objekte ermittelt wird, und dass der früheste ermittelte Kollisionszeitpunkt ($t_{tc}$) als weitere Aktivierungsgröße verwendet wird.

16. Verfahren zum Steuern eines in wenigstens zwei Betriebszuständen betreibbaren Sicherungsmittels in einem Fahrzeug, bei dem mittels eines Umfeldsensors Objektdaten wenigstens eines Objekts im Umfeld des Fahrzeugs erfasst werden, wobei die Objektdaten eine Position des Objekts, eine Geschwindigkeit des Objekts und eine Bewegungsrichtung des Objekts umfassen, wobei

a) aus den Objektdaten ( $\mathbf{r}_{Obj}^{S}$ , $\mathbf{v}_{Obj}^{S}$ ) eine erste Trajektorie ( $\mathbf{r}_{Obj}^{S}(t)$ ) des Objekts bestimmt wird, die zur Ermittlung einer ersten Zeitdauer ($\Delta t_{pcu}$) bis zu einem spätesten Zeitpunkt, zu dem ein Fahrmanöver zur Vermeidung einer Kollision mit dem Objekt einzuleiten ist, herangezogen wird, und dass die Aktivierungsgröße ($dp$) in Abhängigkeit von der ersten Zeitdauer bestimmt $\Delta t_{pcu}$ wird, wobei

b) eine zweite Zeitdauer ($\Delta t_{pcu,br}$) bis zu einem spätesten Zeitpunkt, zu dem ein Abbremsen des Fahrzeugs eingeleitet werden muss, um eine Kollision mit dem Objekt zu vermeiden

c) sowie eine dritte Zeitdauer ($\Delta t_{pcu,st}$) bis zu einem spätesten Zeitpunkt, zu dem eine Lenkbewegung eingeleitet werden muss, um eine Kollision mit dem Objekt zu vermeiden, ermittelt werden und

d) die erste Zeitdauer ($\Delta t_{pcu}$) als Maximum der zweiten Zeitdauer ($\Delta t_{pcu,br}$) und der dritten Zeitdauer ($\Delta t_{pcu,st}$) bestimmt wird,

e) die Trajektorie ( $\mathbf{r}_{Obj}^{S}(t)$ ) zur Ermittlung einer ersten Größe ($dp,t_{tc}$) herangezogen wird, wobei ein Betriebszustand des Sicherungsmittels in Abhängigkeit von einem Ergebnis eines Vergleichs der ersten Größe ($dp,t_{tc}$) mit einem vorgegebenen Schwellenwert ( $S_{dp}^{i}$ , $S_{t}^{i}$ ) verändert wird, und

f) die Trajektorie ( $\mathbf{r}_{Obj}^{S}(t)$ ) zur Bestimmung einer zweiten Größe ($\sigma$, $\theta$) herangezogen wird, wobei der Schwellenwert ( $S_{dp}^{i}$ , $S_{t}^{i}$ ) in Abhängigkeit von der zweiten Größe ($\sigma$, $\theta$) bestimmt wird.

**17.** Verfahren nach Anspruch 16,
**dadurch gekennzeichnet,**
**dass** es sich bei der zweiten Größe um eine Unfallschwere ($\sigma$) handelt, wobei die Unfallschwere ($\sigma$) der relativen Aufprallgeschwindigkeit $(v_c)$ des Objekts und des Fahrzeugs zugeordnet wird.

**18.** Verfahren nach einem der Ansprüche 16 und 17,
**dadurch gekennzeichnet,**
**dass** es sich bei der zweiten Größe um einen Kollisionswinkel ($\theta$) zwischen dem Fahrzeug und dem Objekt handelt.

**19.** Verfahren nach einem der Ansprüche 16 bis 18,
**dadurch gekennzeichnet,**
**dass** es sich bei der ersten Größe um einen Kollisionszeitpunkt ( $t_{tc}$) handelt, zu dem die Trajektorie ( $\mathbf{r}_{Obj}^{S}(t)$ ) des Objekts die vordere Fahrzeugbegrenzungslinie schneidet.

**20.** Verfahren nach einem der Ansprüche 16 bis 19,
**dadurch gekennzeichnet,**
**dass** es sich bei der ersten Größe um eine Aktivierungsgröße handelt, die mittels eines Verfahrens nach einem der Ansprüche 1 bis 15 bestimmt wird.

**21.** Verfahren nach einem der Ansprüche 1 bis 20,
**dadurch gekennzeichnet,**
**dass** es sich bei dem Sicherungsmittel um ein reversibles Sicherungsmittel handelt.

**22.** Verfahren nach einem der Ansprüche 1 bis 21,
**dadurch gekennzeichnet,**
**dass** es sich bei dem Sicherungsmittel um einen reversiblen motorisierten Gurtstraffer handelt.

**Claims**

**1.** Method for determining at least one activation quantity for a safety means in a vehicle, which safety means can be operated in at least two operating states, wherein the operating state of the safety means is altered depending on a result of a comparison of the activation quantity with a predetermined threshold value, wherein object data of at least one object in the surroundings of the vehicle are acquired by means of a surroundings sensor and wherein said object data comprise a position of the object, a speed of the object and a direction of movement of the object, **wherein**

a) a first trajectory $(\mathbf{r}^S_{Obj}(t))$ of the object is determined from the object data $(\mathbf{r}^S_{Obj}, \mathbf{v}^S_{Obj})$, which first trajectory $(\mathbf{r}^S_{Obj}(t))$ is used for the determination of a first period ($\Delta t_{pcu}$) that is left until a latest point in time at which a driving maneuver for avoiding a collision with the object has to be initiated, and that the activation quantity ($dp$) is determined depending on the first period ($\Delta t_{pcu}$), wherein

b) a second period ($\Delta t_{pcu,br}$) is determined that is left until a latest point in time at which a process for slowing the vehicle down for avoiding a collision with the object has to be initiated, and

c) a third period $(\Delta t_{pcu,st})$ is determined that is left until a latest point in time at which a steering motion for avoiding a collision with the object has to be initiated, and

d) the first period ($\Delta t_{pcu}$) is determined as the maximum of the second period $(\Delta t_{pcu,br})$ and of the third period $(\Delta t_{pcu,st})$.

2. Method according to Claim 1,
   **characterized in that**

   a second trajectory $(\mathbf{r}^S_{Obj}(t))$ of a further object is determined, that an intersecting point $(\mathbf{r}^S_{Obj}(t_{tc}))$ of the second trajectory $(\mathbf{r}^S_{Obj}(t))$ and of a front boundary line of the vehicle is determined and a fourth period that is left until a point in time ($t_{tc}$) at which the object reaches the front boundary line of the vehicle is determined, and that, when forming the maximum value for determining the first period $(\Delta t_{pcu})$, the third period $(\Delta t_{pcu,st})$ is disregarded if the distance between the intersecting point of the second trajectory $(\mathbf{r}^S_{Obj}(t))$ and of the front boundary line of the vehicle and a longitudinal axis of the vehicle is smaller than a predetermined safe distance and if the fourth period is shorter than a predetermined threshold value $(\Delta t_{tc,min})$.

3. Method according to any one of the preceding claims,
   **characterized in that**
   the third period $(\Delta t_{pcu,st})$ is determined as the maximum of a period $\Delta t_{pcu,st,l}$ that is left until a latest point in time at which a steering motion for a swerving maneuver in a first transverse direction of the vehicle for avoiding a collision with the object has to be initiated and of a period $\Delta t_{pcu,st,r}$ that is left until a latest point in time at which a steering motion for a swerving maneuver in a second transverse direction of the vehicle for avoiding a collision with the object has to be initiated.

4. Method according to any one of the preceding claims,
   **characterized in that**
   when forming the maximum value for determining the third period $(\Delta t_{pcu,st})$, the period $\Delta t_{pcu,st,l}$ is disregarded if the intersecting point $(\mathbf{r}^S_{Obj}(t_{tc}))$ of the second trajectory $(\mathbf{r}^S_{Obj}(t))$ and of the front boundary line of the vehicle is situated in a collision avoidance region and if the fourth period is shorter than the predetermined threshold value, wherein the collision avoidance region is defined by a distance $(d_{caa})$ between a point of the front boundary line of the vehicle and the longitudinal axis of the vehicle, said point lying in the first transverse direction of the vehicle.

5. Method according to any one of the preceding claims,
   **characterized in that**
   when forming the maximum value for determining the third period $(\Delta t_{pcu,st})$, the period $\Delta t_{pcu,st,r}$ is disregarded if the intersecting point $(\mathbf{r}^S_{Obj}(t_{tc}))$ of the second trajectory $(\mathbf{r}^S_{Obj}(t))$ and of the front boundary line of the vehicle is situated in a collision avoidance region and if the fourth period is shorter than the predetermined threshold value, wherein the collision avoidance region is defined by a distance $(d_{caa})$ between a point of the front boundary line of the vehicle and the longitudinal axis of the vehicle, said point lying in the second transverse direction of the vehicle.

6. Method according to any one of the preceding claims,
   **characterized in that**

   a collision course certainty $(P_{ctrack})$ is assigned to a distance between an intersecting point $(\mathbf{r}^{S}_{Obj}(t_{tc}))$ of the first trajectory $(\mathbf{r}^{S}_{Obj}(t))$ with the front boundary line of the vehicle and the longitudinal axis of the vehicle, wherein the collision course certainty $(P_{ctrack})$ corresponds to a probability of the first object and the vehicle being on a collision course.

7. Method according to any one of the preceding claims,
   **characterized in that**
   an accident non-avoidance probability $(dp_{acc})$ is determined from a relation between the first period $(\Delta t_{pcu})$ that is left until the latest point in time at which a driving maneuver for avoiding a collision with the object has to be initiated and a predetermined further period $(\Delta t_{crit})$.

8. Method according to any one of the preceding claims,
   **characterized in that**
   a danger potential $(dp)$ for an object is determined depending on the accident non-avoidance probability $(dp_{acc})$ and the collision course certainty $(P_{ctrack})$.

9. Method according to any one of the preceding claims,
   **characterized in that**
   the danger potential $(dp)$ is used as an activation quantity.

10. Method according to any one of the preceding claims,
    **characterized in that**

    a point in time of collision $(t_{tc})$ is calculated, at which point in time the trajectory of the object $(\mathbf{r}^{S}_{Obj}(t))$ and the front boundary line of the vehicle intersect.

11. Method according to any one of the preceding claims,
    **characterized in that**
    the point in time of collision $(t_{tc})$ is used as a further activation quantity, wherein the operating state of the safety means is altered depending on a result of a comparison of the point in time of collision $(t_{tc})$ with a predetermined threshold value $(S^{i}_{t})$ ..

12. Method according to any one of the preceding claims,
    **characterized in that**

    trajectories $(\mathbf{r}^{S}_{Obj}(t))$ for several objects detected by the surroundings sensor are determined, said trajectories being used for the determination of the first period for each of the objects with a non-infinitesimal collision course certainty, that a minimum value of the determined first periods $(\Delta t_{pcu})$ is formed, and that the activation quantity $(dp, t_{tc})$ is determined from the formed minimum value.

13. Method according to any one of the preceding claims,
    **characterized in that**

    trajectories $(\mathbf{r}^{S}_{Obj}(t))$ for several objects detected by the surroundings sensor are determined, said trajectories being used for the determination of the first period for each of the objects with a non-infinitesimal collision course certainty, that a minimum value of the determined points in time of collision $(t_{tc})$ is formed, and that the activation quantity $(dp)$ is determined from the object data of the object that is selected according to the minimum value.

**14.** Method according to any one of the preceding claims, **characterized in that** a danger potential (*dp*) for each of the several objects detected by the surroundings sensor is determined, that a maximum value of the determined danger potentials (*dp*) is determined, and that the maximum value is used as an activation quantity.

**15.** Method according to any one of the preceding claims, **characterized in that** a point in time of collision ($t_{tc}$) for the several objects detected by the surroundings sensor is determined, and that the earliest determined point in time of collision *($t_{tc}$)* is used as a further activation quantity.

**16.** Method for controlling a safety means in a vehicle, which safety means can be operated in at least two operating states, in which object data of at least one object in the surroundings of the vehicle are acquired by means of a surroundings sensor, wherein said object data comprise a position of the object, a speed of the object and a direction of movement of the object, wherein

a) a first trajectory $(\mathbf{r}_{Obj}^{S}(t))$ of the object is determined from the object data $(\mathbf{r}_{Obj}^{S}, \mathbf{v}_{Obj}^{S})$, which first trajectory $(\mathbf{r}_{Obj}^{S}(t))$ is used for the determination of a first period ($\Delta t_{pcu}$) that is left until a latest point in time at which a driving maneuver for avoiding a collision with the object has to be initiated, and that the activation quantity (*dp*) is determined depending on the first period ($\Delta t_{pcu}$), wherein

b) a second period *($\Delta t_{pcu,br}$)* is determined that is left until a latest point in time at which a process for slowing the vehicle down for avoiding a collision with the object has to be initiated

c) and a third period ($\Delta t_{pcu, st}$) is determined that is left until a latest point in time at which a steering motion for avoiding a collision with the object has to be initiated, and

d) the first period ($\Delta t_{pcu}$) *is* determined as the maximum of the second period *($\Delta t_{pcu, br}$)* and of the third period ($\Delta t_{pcu, st}$),

e) the trajectory $(\mathbf{r}_{Obj}^{S}(t))$ is used for the determination of a first quantity (*dp*, $t_{tc}$), wherein an operating state of the safety means is altered depending on a result of a comparison of the first quantity *(dp , $t_{tc}$)* with a predetermined threshold value $(S_{dp}^{i}, S_{t}^{i})$, and

f) the trajectory $(\mathbf{r}_{Obj}^{S}(t))$ is used for the determination of a second quantity ($\sigma$, $\theta$), wherein the threshold value $(S_{dp}^{i}, S_{t}^{i})$ is determined depending on the second quantity ($\sigma$, $\theta$).

**17.** Method according to Claim 16, **characterized in that** the second quantity is an accident severity ($\sigma$), wherein the accident severity ($\sigma$) is assigned to the relative impact speed ($v_{c}$) of the object and the vehicle.

**18.** Method according to any one of clams 16 and 17, **characterized in that** the second quantity is a collision angle (0) between the vehicle and the object.

**19.** Method according to any one of claims 16 to 18, **characterized in that** the first quantity is a point in time of collision ($t_{tc}$) at which the trajectory $(\mathbf{r}_{Obj}^{S}(t))$ of the object and the front boundary line of the vehicle intersect.

**20.** Method according to any one of claims 16 to 19, **characterized in that** the first quantity is an activation quantity that is determined by means of a method according to any one of claims 1 to 15.

**21.** Method according to any one of claims 1 to 20,
**characterized in that**
the safety means is a reversible safety means.

**22.** Method according to any one of claims 1 to 21,
**characterized in that**
the safety means is a reversible motorized seat belt tensioner.

**Revendications**

**1.** Procédé de définition d'au moins une grandeur d'activation pour un moyen de sécurité dans un véhicule, pouvant être mis en oeuvre dans au moins deux états de fonctionnement, l'état de fonctionnement du moyen de sécurité étant modifié en fonction d'un résultat d'une comparaison de la grandeur d'activation avec une valeur de seuil paramétrée, des données-objet d'au moins un objet étant détectées dans le champ environnant du véhicule au moyen d'un capteur d'ambiance, et les données-objet comprenant une position de l'objet, une vitesse de l'objet et une direction de déplacement de l'objet,

a) une première trajectoire ( $\mathbf{r}_{Obj}^{S}(t)$ ) de l'objet étant définie à partir des données-objet ( $\mathbf{r}_{Obj}^{S}$ , $\mathbf{v}_{Obj}^{S}$ ) , qui est utilisée pour la détermination d'une première durée de temps ($\Delta t_{pcu}$) jusqu' à un instant ultérieur où une manoeuvre de conduite doit être mise en oeuvre pour éviter une collision avec l'objet, et en ce que la grandeur d'activation (*dp*) est définie en fonction de la première durée de temps $\Delta t_{pcu}$,

b) une deuxième durée de temps ($\Delta t_{pcu, br}$) jusqu'à un instant ultérieur où une décélération du véhicule doit être mise en oeuvre pour éviter une collision avec l'objet, ainsi

c) qu'une troisième durée de temps ( $\Delta t_{pcu, st}$ ) jusqu'à un instant ultérieur où un mouvement de braquage doit être mis en oeuvre pour éviter une collision avec l'objet étant déterminées, et

d) la première durée de temps ( $\Delta t_{pcu}$ ) étant définie comme maximum de la deuxième durée de temps ( $\Delta t_{pcu, br}$ ) et de la troisième durée de temps ( $\Delta t_{pcu, st}$ ).

**2.** Procédé selon la revendication 1,
**caractérisé en ce**

qu'une deuxième trajectoire ( $\mathbf{r}_{Obj}^{S}(t)$ ) d'un autre objet est définie, en ce qu'un point d'intersection ( $\mathbf{r}_{Obj}^{S}(t_{tc})$ ) de la deuxième trajectoire ( $\mathbf{r}_{Obj}^{S}(t)$ ) et d'une ligne avant de délimitation de véhicule ainsi qu'une quatrième durée de temps jusqu'à un instant ($t_{tc}$) où l'objet atteint la ligne avant de délimitation de véhicule sont définis, et en ce que la troisième durée de temps ($\Delta t_{pcu, st}$), lors de la formation de la valeur maximale, n'est pas prise en compte pour la définition de la première durée de temps ($\Delta t_{pcu}$) si la distance entre le point d'intersection de la deuxième trajectoire ( $\mathbf{r}_{Obj}^{S}(t)$ ) et de la ligne avant de délimitation de véhicule et un axe longitudinal de véhicule est plus petite qu'une distance de sécurité paramétrée, et si la quatrième durée de temps est plus petite qu'une valeur de seuil ($\Delta t_{tc,min}$ ) paramétrée.

**3.** Procédé selon une des revendications précédentes,
**caractérisé en ce que**
la troisième durée de temps ($\Delta t_{pcu, st}$) est déterminée comme le maximum d'une durée de temps $\Delta t_{pcu, st, l}$ jusqu'à un instant ultérieur où un mouvement de braquage doit être entrepris pour un évitement dans une première direction transversale de véhicule pour éviter une collision avec l'objet, et d'une durée de temps $\Delta t_{pcu, st, r}$ jusqu' à un moment ultérieur où un mouvement de braquage doit être entrepris pour un évitement dans une deuxième direction transversale de véhicule pour éviter une collision avec l'objet.

**4.** Procédé selon une des revendications précédentes,

**caractérisé en ce que**
la durée de temps $\Delta t_{pcu, st, l}$, lors de la formation de valeur maximale, n'est pas prise en compte pour la détermination de la troisième durée de temps $(\Delta t_{pcu, st})$ si le point d'intersection $(\mathbf{r}_{Obj}^{S}(t_{tc}))$ de la deuxième trajectoire $(\mathbf{r}_{Obj}^{S}(t))$ et de la ligne avant de délimitation de véhicule se situe dans une zone d'évitement de collision, et si la quatrième durée de temps est plus petite que la valeur de seuil paramétrée, la zone d'évitement de collision étant définie par une distance $(d_{caa})$ d'un point de ligne avant de délimitation de véhicule, situé dans la première direction transversale, par rapport à l'axe longitudinal de véhicule.

5. Procédé selon une des revendications précédentes,
**caractérisé en ce que**
la durée de temps $\Delta t_{pcu, st, r}$, lors de la formation de valeur maximale, n'est pas prise en compte pour la définition de la troisième durée de temps $(\Delta t_{pcu, st}$ si le point d'intersection $(\mathbf{r}_{Obj}^{S}(t_{tc}))$ de la deuxième trajectoire $(\mathbf{r}_{Obj}^{S}(t_{tc}))$ et de la ligne avant de délimitation de véhicule se situe dans une zone d'évitement de collision, et si la quatrième durée de temps est plus petite que la valeur de seuil paramétrée, la zone d'évitement de collision étant définie par une distance $(d_{caa})$ d'un point de ligne avant de délimitation de véhicule, situé dans la deuxième direction transversale de véhicule, par rapport à l'axe longitudinal de véhicule.

6. Procédé selon une des revendications précédentes,
**caractérisé en ce**
**qu'**une sécurité de cap de collision $(P_{ctrack})$ est affectée à une distance entre un point d'intersection $(\mathbf{r}_{Obj}^{S}(t_{tc})$ de la première trajectoire $(\mathbf{r}_{Obj}^{S}(t))$ avec la ligne avant de délimitation de véhicule et l'axe longitudinal de véhicule, la sécurité de cap de collision $(P_{ctrack})$ correspondant à une probabilité pour que le premier objet et le véhicule se trouvent sur un cap de collision.

7. Procédé selon une des revendications précédentes,
**caractérisé en ce**
**qu'**une probabilité de non-évitement d'accident $(dp_{acc})$ est déterminée à partir d'une relation entre la première durée de temps $(\Delta t_{pcu})$ jusqu' à l'instant ultérieur où une manoeuvre de conduite doit être mise en oeuvre pour éviter une collision avec l'objet et une autre durée de temps $(\Delta t_{crit})$ paramétrée.

8. Procédé selon une des revendications précédentes,
**caractérisé en ce que,**
en fonction de la probabilité de non-évitement d'accident $(dP_{acc})$ et de la sécurité de cap de collision $(P_{ctrack})$, il est déterminé un potentiel de risque $(dp)$ pour un objet.

9. Procédé selon une des revendications précédentes,
**caractérisé en ce que**
le potentiel de risque $(dp)$ est utilisé comme grandeur d'activation.

10. Procédé selon une des revendications précédentes,
**caractérise en ce**
**qu'**il est calculé un instant de collision $(t_{tc})$ où la trajectoire de l'objet $(\mathbf{r}_{Obj}^{S}(t))$ coupe la ligne avant de délimitation de véhicule.

11. Procédé selon une des revendications précédentes,
**caractérisé en ce que**
l'instant de collision $(t_{tc})$ est utilisé comme autre grandeur d'activation, l'état de fonctionnement du moyen de sécurité étant modifié en fonction d'un résultat d'une comparaison de l'instant de collision $(t_{tc})$ avec une valeur de seuil

( $S_t^i$ ) paramétrée.

**12.** Procédé selon une des revendications précédentes,
**caractérisé en ce que**

des trajectoires ( $\mathbf{r}_{Obj}^S(t)$ ) pour plusieurs objets détectés par le capteur d'ambiance sont définies, qui sont utilisées pour la détermination de la première durée de temps pour chacun des objets avec une sécurité de cap de collision petite non infime, **en ce qu'**une valeur minimale des premières durées de temps ($\Delta t_{pcu}$) déterminées est formée, et **en ce que** la grandeur d'activation (*dp*, $t_{tc}$) est définie à partir de la valeur minimale formée.

**13.** Procédé selon une des revendications précédentes,
**caractérisé en ce que**

des trajectoires ( $\mathbf{r}_{Obj}^S(t)$ ) pour plusieurs objets détectés par le capteur d'ambiance sont définies, qui sont utilisées pour la détermination de la première durée de temps pour chacun des objets avec une sécurité de cap de collision petite non infime, **en ce qu'**une valeur minimale des instants de collision ($t_{tc}$) déterminés est formée, et **en ce que** la grandeur d'activation (*dp*) est définie à partir des données-objet de l'objet sélectionné conformément à la valeur minimale.

**14.** Procédé selon une des revendications précédentes,
**caractérisé en ce**
**qu'**un potentiel de risque (*dp*) est déterminé pour chacun des plusieurs objets détectés par le capteur d'ambiance, en ce qu'une valeur maximale des potentiels de risque (*dp*) déterminés est définie, et en ce que la valeur maximale est utilisée comme grandeur d'activation.

**15.** Procédé selon une des revendications précédentes,
**caractérisé en ce**
**qu'**un instant de collision ($t_{tc}$) est déterminé pour les plusieurs objets détectés par le capteur d'ambiance, et en ce que l'instant de collision ($t_{tc}$) déterminé le plus tôt est utilisé comme une autre grandeur d'activation.

**16.** Procédé de commande d'un moyen de sécurité dans un véhicule, pouvant être mis en oeuvre dans au moins deux états de fonctionnement, avec lequel des données-objet d'au moins un objet dans l'environnement du véhicule peuvent être détectées au moyen d'un capteur d'ambiance, les données-objet comprenant une position de l'objet, une vitesse de l'objet et une direction de déplacement de l'objet,

a) une première trajectoire ( $\mathbf{r}_{Obj}^S(t)$ ) de l'objet étant définie à partir des données-objet ( $\mathbf{r}_{Obj}^S$ , $\mathbf{v}_{Obj}^S$ ) ,

qui est utilisée pour la détermination d'une première durée de temps ($\Delta t_{pcu}$) jusqu'à un instant ultérieur où une manoeuvre de conduite doit être mise en oeuvre pour éviter une collision avec l'objet, et en ce que la grandeur d'activation (*dp*) est définie en fonction de la première durée de temps $\Delta t_{pcu}$,
b) une deuxième durée de temps ($\Delta t_{pcu,br}$) jusqu'à un instant ultérieur où une décélération du véhicule doit être mise en oeuvre pour éviter une collision avec l'objet, ainsi
c) qu'une troisième durée de temps ($\Delta t_{pcu,st}$) jusqu'à un instant ultérieur où un mouvement de braquage doit être mis en oeuvre pour éviter une collision avec l'objet étant déterminées, et
d) la première durée de temps ($\Delta t_{pcu}$) étant définie comme maximum de la deuxième durée de temps ($\Delta t_{pcu,br}$) et de la troisième durée de temps ($\Delta t_{pcu,st}$).

e) la trajectoire ( $\mathbf{r}_{Obj}^S(t)$ ) pour la détermination d'une première grandeur (*dp*, $t_{tc}$) étant utilisée, un état de fonctionnement du moyen de sécurité étant modifié en fonction d'un résultat d'une comparaison de la première grandeur (*dp*, $t_{tc}$) avec une valeur de seuil ( $S_{dp}^i$ , $S_t^i$ ) paramétrée, et

f) la trajectoire ( $\mathbf{r}_{Obj}^S(t)$ ) étant utilisée pour la définition d'une deuxième grandeur (σ, θ), la valeur de seuil

( $S_{dp}^i$ , $S_t^i$ ) étant définie en fonction de la deuxième grandeur (σ, θ).

17. Procédé selon la revendication 16,
    **caractérisé en ce que,**
    dans le cas de la deuxième grandeur, il s'agit d'une gravité d'accident (σ), la gravité d'accident (σ) étant affectée à la vitesse d'impact ($v_c$) relative de l'objet et du véhicule.

18. Procédé selon une des revendications 16 et 17,
    **caractérisé en ce que,**
    dans le cas de la deuxième grandeur, il s'agit d'un angle de collision (θ) entre le véhicule et l'objet.

19. Procédé selon une des revendications 16 à 18,
    **caractérisé en ce que,**

    dans le cas de la première grandeur, il s'agit d'un instant de collision ($t_{tc}$) où la trajectoire ( $\mathbf{r}_{Obj}^S(t)$ ) de l'objet coupe la ligne avant de délimitation de véhicule.

20. Procédé selon une des revendications 16 à 19,
    **caractérisé en ce que,**
    dans le cas de la première grandeur, il s'agit d'une grandeur d'activation qui est définie au moyen d'un procédé selon une des revendications 1 à 15.

21. Procédé selon une des revendications 1 à 20,
    **caractérisé en ce que,**
    dans le cas du moyen de sécurité, il s'agit d'un moyen de sécurité réversible.

22. Procédé selon une des revendications 1 à 21,
    **caractérisé en ce que,**
    dans le cas du moyen de sécurité, il s'agit d'un prétensionneur de ceinture motorisé réversible.

$x^S$

$y^S$

$U$

**Fig. 1**

$v_{xObj}^A$

entgegenkommend

$v_{x1}$

stehend

$v_{xObj}^A = 0$

$v_{x2}$

mitbewegt

Fig. 2

Fig. 3

**Fig. 4**

Fig. 5

$b_{Obj,l}$

$b_{Obj,max}$

$b_{Obj,min}$

$y_{Obj}^{S}(t_{lc})$

$-b_F/2$     $b_F/2$

**Fig. 6**

$\sigma$

1

$v_c$

$v_{\sigma,max}$

**Fig. 7**

30

Fig. 8

$$t_{tc} < S_l^i$$
und
$$dp > S_{dp}^i ?$$

ja

RMG aktiv ?   nein

ja

Stufe i höher als die momentane Stufe ?

nein   ja

Zeitdauer $\Delta t_{active}$ abgelaufen?

nein   ja

Aktivierung der Stufe i

momentane Stufe beibehalten

Deaktivierung der RMG

Neustart der Zeitdauer $\Delta t_{active}$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19636448 C2

- DE 10301290 A1